# EUROPÄISCHE PATENTSCHRIFT

(11) **EP 1 087 982 B1**
(45) Veröffentlichungstag und Bekanntmachung des Hinweises auf die Patenterteilung: **02.10.2002**
(21) Anmeldenummer: 99927963.1
(22) Anmeldetag: 12.06.1999
(51) Int. Cl.: C07F 17/00, C08F 10/00, C07F 7/08, C07F 7/10, C07F 7/22, C07F 7/30, C07F 5/06, C07F 5/02, C07F 9/28, C08F 110/00, C08F 210/00, B32B 27/32

(54) **ÜBERGANGSMETALLKOMPLEXE**
TRANSITION METAL COMPLEXES
COMPLEXES DE METAUX DE TRANSITION

(30) Priorität: 15.06.1998 DE 19826403
(43) Veröffentlichungstag der Anmeldung: 04.04.2001
(73) Patentinhaber: Basell Polyolefine GmbH, 50389 Wesseling (DE)
(72) Erfinder: KRISTEN, Marc, Oliver, D-67117 Limburgerhof (DE); LANGHAUSER, Franz, D-67152 Ruppertsberg (DE); SCHWEIER, Günther, D-67159 Friedelsheim (DE); SITZMANN, Helmut, D-67659 Kaiserslautern (DE); KRAMMER, Ralf, D-67098 Bad Dürkheim (DE); SAURENZ, Dirk, D-67691 Hochspeyer (DE)
(74) Vertreter: Meyer, Thomas Hans
(86) Internationale Anmeldenummer: EP9904056
(87) Internationale Veröffentlichungsnummer: WO99065923

(56) Entgegenhaltungen:
- EP-A- 0 416 815

## Beschreibung

Die vorliegende Erfindung betrifft Übergangsmetallkomplexe der allgemeinen Formeln (Ia) oder (Ib), 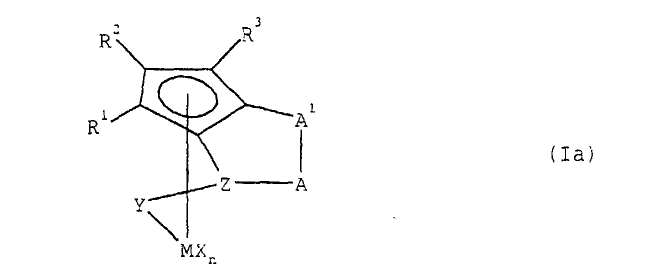 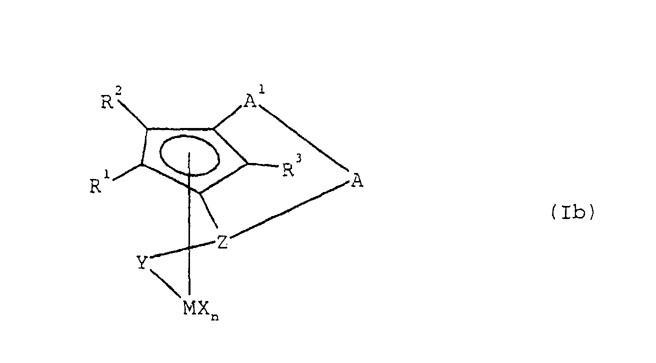 in denen die Substituenten und Indizes folgende Bedeutung haben:
- R¹ bis R³: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei die Reste mit benachbarten Resten jeweils mit den sie verbindenden Atomen einen 5 bis 15 C-Atome aufweisenden gesättigten oder ungesättigten Ring bilden können, oder Si(R⁴)₃ mit
- R⁴: C₁-C₁₀-Alkyl, C₃-C₁₀-Cycloalkyl oder C₆-C₁₅-Aryl,
- M: Titan, Zirkonium, Hafnium, Vanadium, Niob oder Tantal oder ein Element der III. Nebengruppe des Periodensystems oder der Lanthanoiden,
- X: Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁵ oder -NR⁵R⁶,
- n: 1, 2 oder 3, wobei n der Wertigkeit von M minus der Zahl 2 entspricht,
wobei
- R⁵ und R⁶: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
- Y: ―O―, ―S―, 〉NR⁷ oder 〉PR⁷ bedeutet, wobei
- R⁷: C₁-C₁₀-Alkyl, C₆-C₁₅-Aryl, C₃-C₁₀-Cycloalkyl oder C₇-C₁₈-Alkylaryl oder einfach oder mehrfach mit Si(R⁸)₃, SR⁸, OR⁸, 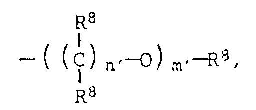 OSi(R⁸)₃, N(R⁸)₂, P(R⁸)₂ oder einer Kombination davon substituiertes C₁-C₁₀-Alkyl, C₆-C₁₅-Aryl, C₃-C₁₀-Cycloalkyl oder C₇-C₁₈-Alkylaryl oder Si(R⁸)₃ ist mit
- n' und m': jeweils 1, 2, 3 oder 4 und
- R⁸: Wasserstoff, C₁-C₁₀-Alkyl, C₆-C₁₅-Aryl, das seinerseits mit C₁-C₄-Alkylgruppen substituiert sein kann, oder C₃-C₁₀-Cycloalkyl,
wobei die Reste R⁸ gleich oder verschieden sind,
- Z: eine dreifachverknüpfende Brückengruppe ist und
- A und A¹: für zweifachverknüpfende Brückenglieder stehen.

Außerdem betrifft die Erfindung Verfahren zur Herstellung der Übergangsmetallkomplexe, zu deren Herstellung als Zwischenprodukte eingesetzte Verbindungen, die Verwendung der Übergangsmetallkomplexe zur Polymerisation von Olefinen sowie Verfahren zur Polymerisation von Olefinen.

Metallocen-Katalysatoren werden in der letzten Zeit verstärkt zur Polymerisation oder Copolymerisation von Ethylen oder Propylen eingesetzt. Bei der Ethylenpolymerisation ist es häufig erwünscht, einen hohen Gehalt an Comonomeren wie But-1-en, Hex-1-en oder Oct-1-en in den Ethylencopolymerisaten zu erhalten. Bei der Propylenpolymerisation wird in der Regel ein isotaktischer Aufbau der Polymerketten angestrebt. Mit Metallocen-Katalysatoren können über die Ligandenstruktur diese Eigenschaften gesteuert werden.

Allgemein wird angenommen, daß der Öffnungswinkel zwischen den Cyclopentadienylringen des Metallocens einen großen Einfluß auf das Einbauverhalten besitzt. Einen großen Öffnungswinkel kann man z.B. durch Verbrückung der Ringe durch eine SiMe₂- oder C₂H₄-Brücke erreichen. Solche Metallocen-Katalysatoren sind beispielsweise in der EP-A 336 128 beschrieben. Durch die Verbrükkung können diese Komplexe sowohl in racemischer als auch in meso-Form existieren. Die racemischen Metallocene eigenen sich besonders für den Einsatz in der Propylenpolymerisation, da hier stereo-selektive Katalysatoren notwendig sind. Ein Nachteil dieser Metallocene ist aber, daß bei der Synthese in der Regel ein Gemisch aus racemischer und meso-Form anfällt, aus dem die meso-Form aufwendig abgetrennt werden muß.

Bei anderen Metallocen-Katalysatoren ist ein Cyclopentadienylring durch einen Heteroliganden, beispielsweise eine Amidgruppe, ersetzt. Die Amidgruppe ist bei diesen Metallocenen über eine Brücke (z.B. SiMe₂) kovalent mit dem Ringsystem verbunden. Verbindungen dieser Art sind beispielsweise in der EP-A 416 815 und EP-A 420 436 beschrieben. Es ist bekannt, daß Metallocenkomplexe dieser Art besonders gut Comonomere bei der Ethylen-α-Olefin-Copolymerisation einbauen und eine hohe Molmasse liefern. Allerdings war es bisher nicht möglich, mit Komplexen dieses Typs isotaktisches Polypropylen zu erhalten, da das Metallzentrum keine C2-Symmetrie aufwies. Das erhaltene Polypropylen war ataktisch mit teilweise syndiotaktischen Anteilen (WO 94/00500, US-A 5 096 867, EP-A 520 732, US-A 5 504 169).

Neben den Metallocenen mit einem Cyclopentadienylring und einem Heteroatom als Liganden sind auch komplexere Systeme z.B. mit einem Fluorenylsystem und einem Heteroatom bekannt (Okuda et al., Organometallics 1995, 14, 789-795). Auch hierbei erhält man aber kein chirales Metallatom. während in der US-A 5 026 798 die Synthese von teilweise isotaktischem Polypropylen mit Katalysatoren dieses Typs beschrieben, zeigen neuere Untersuchungen (A.L. McKnight et al. Organometallics 1997, 16, 2879-2885), daß mit den identischen Systemen lediglich Isotaktizitäten erzielt werden, die im Bereich des statistisch Erwarteten liegen. Das verwendete Ligandengerüst besitzt also keinen Einfluß auf die Isotaktizität.

Aufgabe der Erfindung war daher, den oben beschriebenen Nachteilen abzuhelfen und einen Metallocenkomplex zu entwickeln, der bei der Ethylenpolymerisation verfahrenstechnische Vorteile und insbesondere einen hohen Comonomereinbau zeigt und eine hohe Molmasse liefert. Weiterhin sollte das Metallocen in der Lage sein, die Herstellung von isotaktischem Polypropylen zu katalysieren und auch dort eine hohe Molmasse zu liefern. Schließlich sollte die Struktur des Metallocens so beschaffen sein, daß es verfahrenstechnisch einfach herzustellen ist und insbesondere bei der Synthese keine meso-Form entstehen kann, die für viele Anwendungen sonst aufwendig abgetrennt werden müßte.

Demgemäß wurden die eingangs definierten Übergangsmetallkomplexe gefunden. Außerdem wurden Verfahren zu deren Herstellung, zu ihrer Herstellung als Zwischenprodukte eingesetzte Verbindungen, die Verwendung der Übergangsmetallkomplexe zur Polymerisation von Olefinen sowie Verfahren zur Polymerisation von Olefinen.

Die Substituenten R¹ bis R³ sind vorzugsweise ein Wasserstoffatom, ein C₁-C₆-Alkylrest wie Methyl, Ethyl, n-Propyl, iso-Propyl, n-Butyl, iso-Butyl, sek.-Butyl oder tert.-Butyl sowie die verschiedenen Isomeren von Pentyl oder Hexyl, oder ein Arylreste wie Phenyl oder Naphtyl, die unsubstituiert oder mit Alkylreste aus der gerade genannten Gruppe substituiert sein können. Ebenfalls bevorzugt sind Substituenten R¹ bis R³, die mit benachbarten Substituenten R¹ bis R³ oder mit Substituenten des Brückenglieds A¹ jeweils mit den sie verbindenden Atomen einen 5 bis 10 C-Atome aufweisenden, gesättigten oder ungesättigten Ring bilden.

Unter den Übergangsmetallen M in den allgemeinen Formeln (Ia) und (Ib) sind die Elemente der 4. Nebengruppe des Periodensystems, also Titan, Zirkonium und Hafnium, bevorzugt. Besonders bevorzugt sind Titan und Zirkonium.

Als Liganden X sind insbesondere die Halogene Fluor, Chlor, Brom und Iod zu nennen, besonders bevorzugt ist Chlor. Unter den C₁-C₁₀-Alkylresten kommen besonders Methyl, Ethyl, Propyl und Butyl in Betracht. Bevorzugter C₆-C₁₅-Arylrest ist der Phenylrest.

Die Zahl n entspricht der Wertigkeit von M minus der Zahl 2, d.h. für die Komplexe von Titan, Zirkonium oder Hafnium ist n = 2, für die Komplexe von Vanadium, Niob oder Tantal ist n = 3 und für die Elemente der III, Nebengruppe des Periodensystems, also Scandium, Yttrium und Lanthan, und der Lanthanoiden ist n = 1.

Von den Heteroliganden Y sind ―O―, ―S― und 〉NR⁷ bevorzugt, wobei als Substituenten am Stickstoffatom insbesondere Methyl, Ethyl, n-Propyl, iso-Propyl, n-Butyl, tert.-Butyl, Cyclohexyl, Phenyl, Benzyl und Si(R⁸)₃ zu nennen sind. Bevorzugte Substituenten am Stickstoffatom sind auch Reste R⁷, die einfach oder mehrfach durch als Lewisbasen wirkende Gruppen wie Si(R⁸)₃, SR⁸, OR⁸, 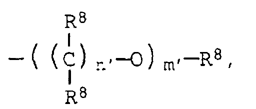 OSi(R⁸)₃, N(R⁸)₂, P(R⁸)₂ oder Kombinationen dieser Gruppen substituiert sind, wobei n' und m' jeweils für die Zahlen 1, 2, 3 oder 4 stehen. Besonders bevorzugte Gruppen sind hierbei OR⁸ und N(R⁸)₂. Besonders bevorzugte substituierte Reste R⁷ sind substituierte C₁-C₁₀-Alkylgruppen, insbesondere substituierte Methylgruppen, Ethylgruppen, n-Propylgruppen, iso-Propylgruppen, n-Butylgruppen, tert.-Butylgruppen und Cyclohexylgruppen.

Die Brückengruppe Z ist in der Regel eine dreifachverknüpfende organische oder metallorganische Atomgruppe, die die sowohl direkt als auch über die Brückenglieder A und A¹ an das Cyclopentadienylringsystem sowie an den Heteroliganden Y gebunden ist.

Geeignete Brückengruppen Z sind beispielsweise 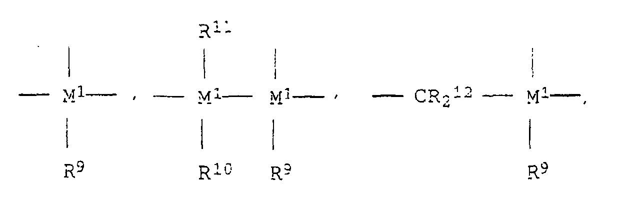 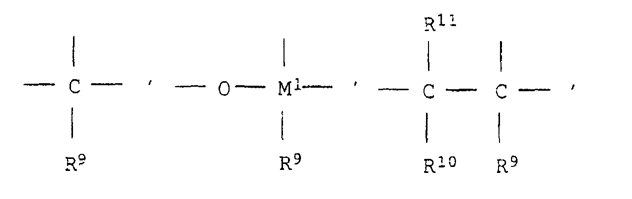 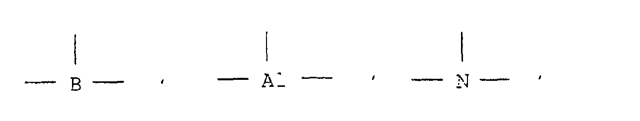 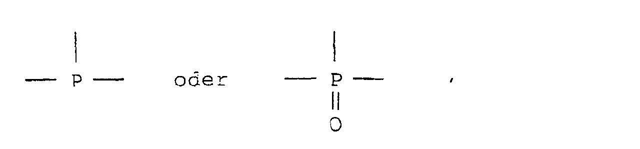 wobei
- R⁹ bis R¹²: jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder zwei Reste R⁹ bis R¹² mit den sie verbindenden Atomen einen 4 bis 15 C-Atome aufweisenden gesättigten oder ungesättigten Ring bilden, und
- M¹: Silicium, Germanium oder Zinn ist,

Als Brückengruppe Z eignen sich insbesondere die Reste 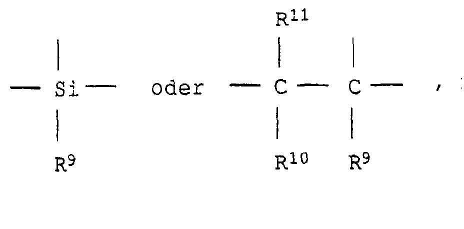 in denen R⁹ bis R¹¹ für Methyl, Ethyl, tert.-Butyl oder Phenyl stehen. Besonders bevorzugt handelt es sich bei der Brückengruppe Z um Si(Me), Si(Ph), Si(t-Bu) oder C(CH₃)₂C(CH₃).

Die zweifachverknüpfenden Brückenglieder A und A¹ bewirken eine zweite Bindung der Brückengruppe Z an das Cyclopentadienylringsystem. Damic unterscheidet sich die "rechte" und die "linke" Seite des Metallocenkomplexes und die Generierung eines stereoselektiven Polymerisationszentrums ist möglich.

Das Brückenglied A kann wiederum aus mehreren zweifachverknüpfenden Brückengliedern A² bestehen, wobei A bevorzugt -(A²)ₘ- mit m von 1 bis 6 ist. Besonders bevorzugt umfaßt das Brückenglied A von 1 bis 3 Glieder A² und insbesondere 2 Glieder A².

Die Glieder A¹ oder A² sind in der Regel organische oder metallorganische Atomgruppen, die vorzugsweise entweder aus einem substituierten Brückenatom oder einem substituieren oder unsubstituierten aromatischen Ring bestehen. A¹ und A² sind beispielsweise 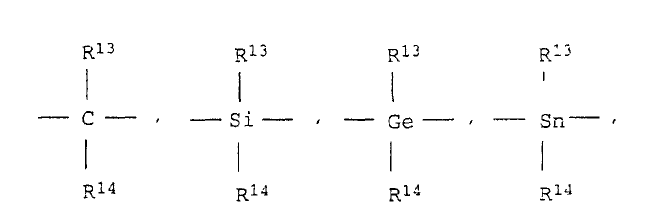 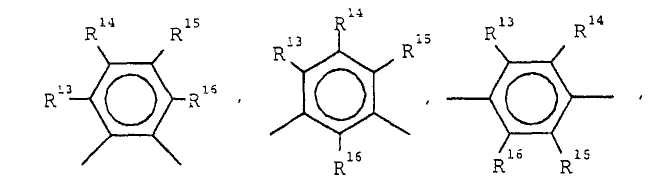 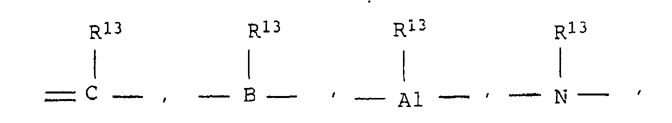 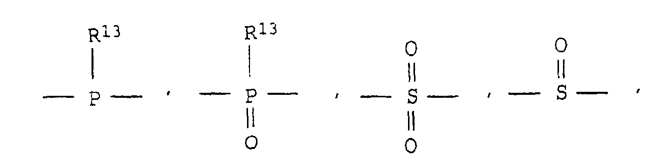 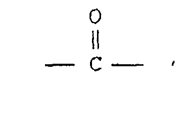 -O- oder -S- ,
wobei A¹ und die einzelnen Glieder A² von A gleich oder verschieden sind, und
- R¹³ bis R¹⁶: gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder wobei zwei benachbarte Reste jeweils mit den sie verbindenden Atomen einen 5 bis 15 C-Atome aufweisenden gesättigten oder ungesättigten Ring bilden, oder
wobei ein Rest R¹³ bis R¹⁶ von A¹ zusammen mit einem benachbarten Rest R² oder R³ einen mit den sie verbindenden Atomen 5 bis 15 C-Atome aufweisendes, gesättigtes oder ungesättigtes Ringsystem bilden.

Bevorzugt enthalten die Glieder A¹ oder A² als Brückenatome Kohlenstoff, Silicium, Stickstoff oder Sauerstoff. Als Substituenten an den Brückenatome sind Wasserstoff, Methyl, Ethyl und Phenyl bevorzugt. Ebenfalls bevorzugt sind Phenylringe, die als bevorzugte Substituenten Methyl-, Ethyl- oder Phenylgruppen tragen können.

Besonders bevorzugt sind Übergangsmetallkomplexe der allgemeinen Formeln (Ia) oder (Ib), in denen die Gruppe A¹ mit einem benachbarten Rest R² oder R³ einen gesättigten oder ungesättigten Ring bildet. Ganz besonders bevorzugt sind hierbei Übergangsmetallkomplexe der allgemeinen Formel (Ia'), 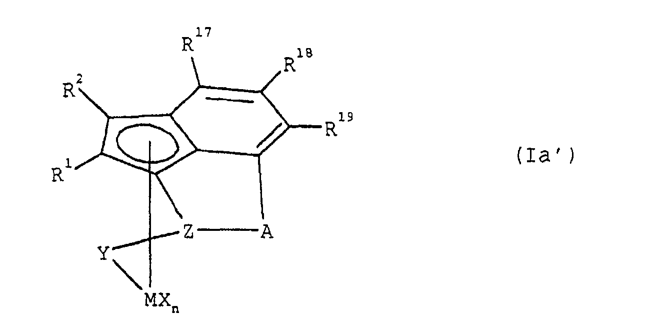 in der die Gruppen A¹ und R³ der allgemeinen Formel (Ia) gemeinsam einen ungesättigten, 6 C·Atome aufweisenden Ring bilden und
- R¹⁷ bis R¹⁹: jeweils ein Wasserstoffatom, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe bedeuten, oder wobei zwei benachbarte Reste jeweils mit den sie verbindenden Atomen einen 5 bis 15 C-Atome aufweisenden gesättigten oder ungesättigten Ring bilden, oder Si(R⁴)₃ sind.

Die Substituenten R¹⁷ bis R¹⁹ sind vorzugsweise ein Wasserstoffatom, ein C₁-C₆-Alkylrest wie Methyl, Ethyl, n-Propyl, iso-Propyl, n-Butyl, iso-Butyl, sek.-Butyl oder tert.-Butyl sowie die verschiedenen Isomeren von Pentyl oder Hexyl, oder ein Arylreste wie Phenyl oder Naphtyl, die unsubstituiert oder mit Alkylreste aus der gerade genannten Gruppe substituiert sein können. Ebenfalls bevorzugt sind benachbarte Substituenten R¹⁷ bis R¹⁹, die jeweils mit den sie verbindenden Atomen einen 5 bis 10 C-Atome aufweisenden, gesättigten oder ungesättigten Ring bilden.

Die erfindungsgemäßen Übergangsmetallkomplexe können als solche vorliegen. Es ist jedoch auch möglich, daß neben den Liganden X, Y und dem Cyclopentadienylringsystem noch von 1 bis 3 neutrale Lewisbasen wie Tetrahydrofuran, Diethylether, Trimethylamin oder N,N-Dimethylanilin an das Übergangsmetallatom koordiniert sind. Es ist auch möglich, daß die Übergangsmetallkomplexe als Dimere vorliegen.

Für die Herstellung der erfindungsgemäßen Übergangsmetallkomplexe wurde ein Verfahren gefunden, daß dadurch gekennzeichnet ist, daß man Cyclopentadienverbindungen der allgemeinen Formel (IIa) oder der allgemeinen Formel (IIb) 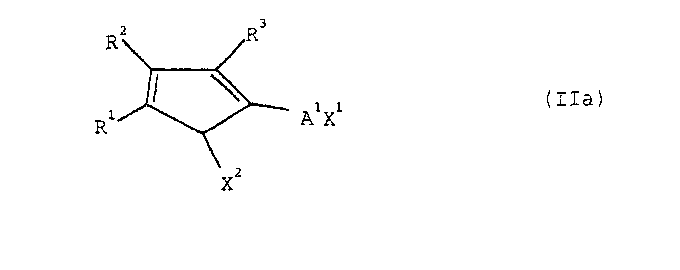 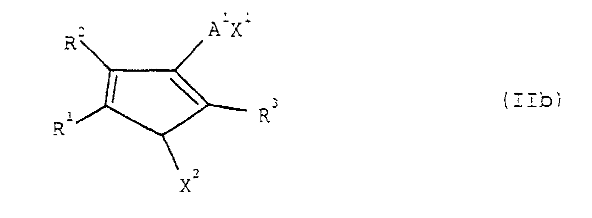 in denen
- R¹ bis R³ und A¹: die oben genannte Bedeutung haben und
- X¹: für Wasserstoff oder ein Halogen und
- X²: für Wasserstoff oder einen Rest der Formel M²R²⁰₍ₒ₋₁₎ stehen, in der
- M²: ein Element der 1. - 4. Hauptgruppe des Periodensystems,
- R²⁰: ein Halogen, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²⁰ gleich oder verschieden sein können, und
- o: die Wertigkeit von M² bedeuten,
mit Verbindungen der allgemeinen Formel (III) 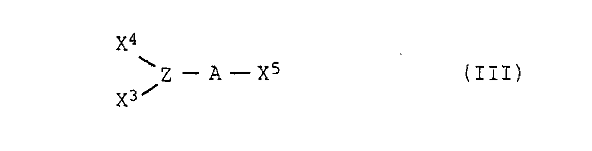 in denen
- Z und A: die oben genannte Bedeutung haben,
- X³ und X⁴: jeweils für ein Halogen und
- X⁵: für Wasserstoff, ein Halogen oder eine Gruppe 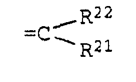 mit
- R²¹ und R²²: jeweils Wasserstoff, C₁-C₁₀-Alkyl, C₃-C₁₀-Cycloalkyl oder C₆-C₁₅-Aryl stehen,
zu Verbindungen der allgemeinen Formeln (IVa) oder (IVb) umsetzt, 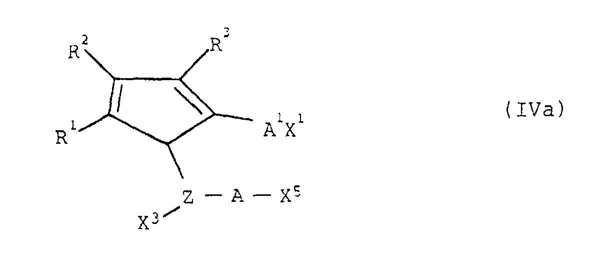 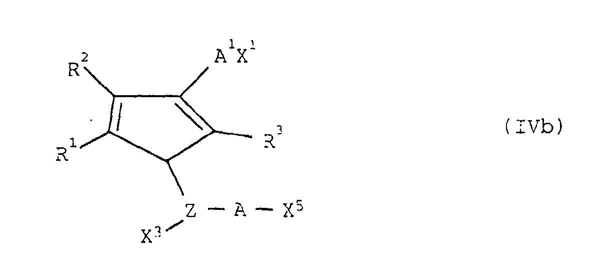 aus diesen durch intramolekularen Ringschluß die Verbindungen der allgemeinen Formeln (Va) oder (Vb) herstellt, 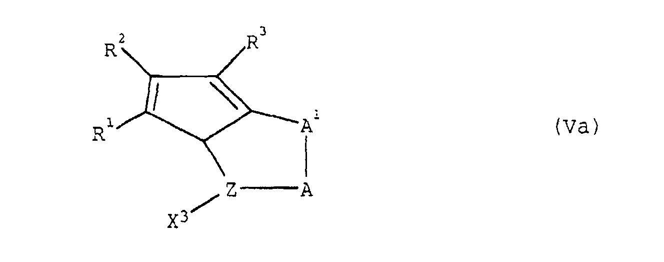 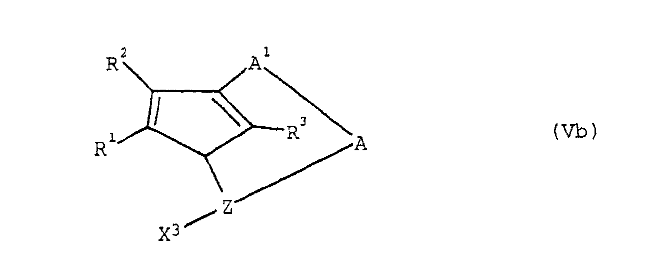 welche zu Verbindungen der allgemeinen Formeln (VIa) oder (VIb) umgesetzt werden, 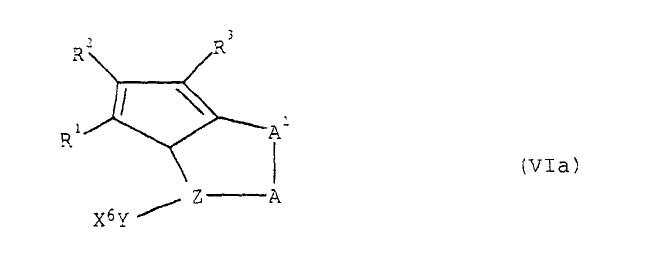 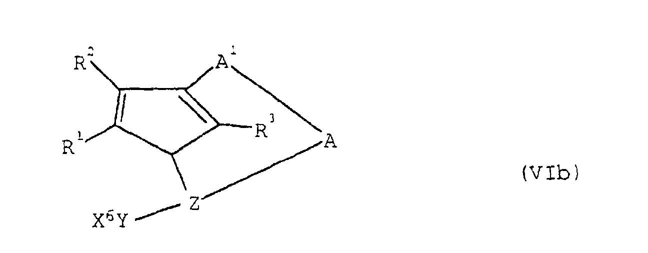 in denen
- X⁶: für Wasserstoff oder einen Rest der Formel M³R²³₍ₚ₋₁₎ steht, in der
- M³: ein Element der 1. - 4. Hauptgruppe des Periodensystems,
- R²³: ein Halogen, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²³ gleich oder verschieden sein. können, und
- p: die Wertigkeit von M³ bedeuten,
und die man dann in die Übergangsmetallkomplexe der allgemeinen Formeln (Ia) oder (Ib) überführt.

Ein bevorzugtes Verfahren zur Herstellung der erfindungsgemäßen Übergangsmetallkomplexe besteht darin, daß man Indenverbindungen der allgemeinen Formel (IIa') 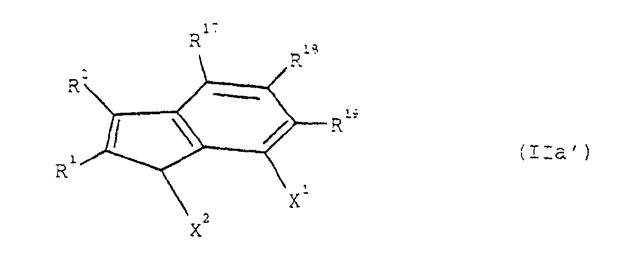 in der X¹, X², R¹, R² und R¹⁷ bis R¹⁹ die oben genannte Bedeutung haben,
mit einer Verbindung der allgemeinen Formel (III)
zu Verbindungen der allgemeinen Formel (IVa') umsetzt, 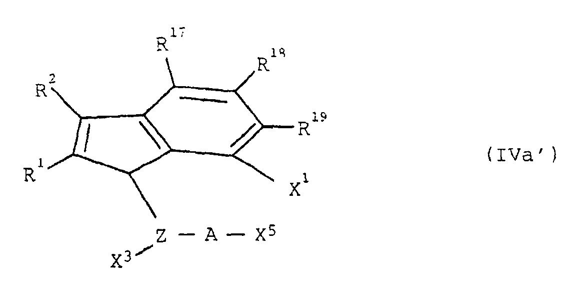 in der X³, X⁵, Z und A die oben genannte Bedeutung haben,
aus diesen durch intramolekularen Ringschluß die Verbindungen der allgemeinen Formel (Va') herstellt, 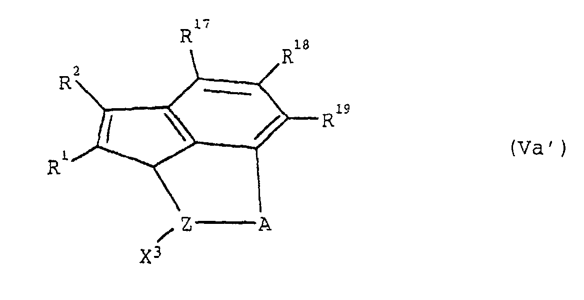 welche zu Verbindungen der allgemeinen Formel (VIa') umgesetzt werden, 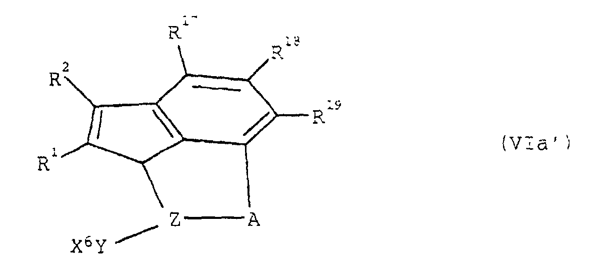 in der X⁶ und Y die oben genannte Bedeutung haben, und die man dann in die Übergangsmetallkomplexe der allgemeinen Formel (Ia') überführt.

Die Ausgangsverbindungen (IIa), (IIa') und (IIb) sowie (III) sind bekannt oder können in bekannter Weise Hergestellt werden. Teilweise sind sie kommerziell verfügbar.

Ihre Umsetzung kann nach den gängigen Methoden der Substitution an Cyclopentadiensystemen erfolgen und wird in der Regel in Lösung durchgeführt, wobei die Verwendung von etherischen Lösungsmitteln wie Diethylether oder THF bevorzugt ist. Die Reihenfolge der Zugabe ist an sich unkritisch. Bevorzugt ist, die Verbindungen (IIa), (IIa') oder (IIb) im Lösungsmittel vorzulegen und die Verbindung oder die Verbindungen (III) unverdünnt oder in Lösung dazuzugeben. Dies kann bei Temperaturen von -100 bis +100°C, bevorzugt von -80 bis +30°C, erfolgen. Die Produkte (IVa), (IVa') oder (IVb) können dann z.B. durch Extraktion (bei einem oder mehreren festen weiteren Reaktionsprodukten) oder durch Destillation (bei einem oder mehreren flüssigen weiteren Reaktionsprodukten) gewonnen werden.

Der intramolekulare Ringschluß zu den Verbindungen (Va), (Va') oder (Vb) kann allgemein nach den bekannten Methoden der C-C-, C-Heteroatom- oder Heteroatom-Heteroatom-Bindungsknüpfung durchgeführc werden, wie sie z.B. in Jerry March, Advanced Organic Chemistry, John Wiley & Sons, New York 1985 oder Organikum, VEB Deutscher Verlag der Wissenschaften, Berlin 1977 beschrieben sind. Als besonders geeignete Reaktionen sind in Abhängigkeit von der Natur der Reste A¹, X¹, A und X⁵ Friedel-Crafts-Alkylierung, Friedel-Crafts-Acylierung, Azo-Kupplung, radikalische Bindungsknüpfung, Wurz-Reaktion, Addition einer Heteroatom-Wasserstoff-Bindung an eine C-C-, C-Heteroatom- oder Heteroatom-Heteroatom-Mehrfachbindung (z.B. Hydrosilylierung, Hydroborierung, Hydroaminierung), Bildung von Schiffschen Basen, Bildung von Amiden, Veresterung (auch organometallkatalysiert), Veretherung, Grignard-Reaktion, McMurry-Kupplung, Diels-Alder-Reaktion, Kreuzkupplungen von Aromaten, Heck-Reaktion, Suzuki-Kupplung, Reformatsky-Reaktion, Wittig-Reaktion, Ritter-Reaktion und Kondensationsreaktionen (z.B. Aldolkondensation, Knoevenagel-Kondensation, Perkin-Reaktion) zu nennen. Im Fall von Verbindungen der Formel (IVa') sind die Reaktionen Friedel-Crafts-Alkylierung oder Friedel-Crafts-Acylierung besonders bevorzugt. Die Friedel-Crafts-ALkvlierung kann auch als zweistufige Synthese, ausgehend von der ungesättigten Verbindung und der in situ-Bildung der entsprechenden halogenierten Vorstufe, durchgeführt werden.

Die Verbindungen (Va), (Va') oder (Vb) werden anschließend mit Verbindungen der Formel YX⁶X⁷ umgesetzt, in denen
- Y: ―O―, ―S―, 〉NR⁷ oder 〉PR⁷ bedeutet, wobei
- R⁷: C₁-C₁₀-Alkyl, C₆-C₁₅-Aryl, C₃-C₁₀-Cycloalkyl oder C₇-C₁₈-Alkylaryl oder einfach oder mehrfach mit Si(R⁸)₃, SR⁸, OR⁸, 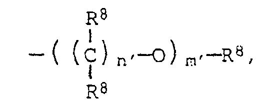 OSi(R⁸)₃, N(R⁸)₂, P(R⁸)₂ oder einer Kombination davon substituiertes C₁-C₁₀-Alkyl, C₆-C₁₅-Aryl, C₃-C₁₀-Cycloalkyl oder C₇-C₁₈-Alkylaryl oder Si(R⁸)₃ ist mit
- n' und m': jeweils 1, 2, 3 oder 4 und
- R⁸: Wasserstoff, C₁-C₁₀-Alkyl, C₆-C₁₅-Aryl, das seinerseits mit C₁-C₄-Alkylgruppen substituiert sein kann, oder C₃-C₁₀-Cycloalkyl,
wobei die Reste R⁸ gleich oder verschieden sind,
und
- X⁶ und X⁷: für Wasserstoff oder einen Rest der Formel M³R²³₍ₚ₋₁₎ steht, in der
- M³: ein Element der 1. - 4. Hauptgruppe des Periodensystems,
- R²³: ein Halogen, eine C₁-C₁₀-Alkylgruppe, eine 5 - bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²³ gleich oder verschieden sein können, und
- p: die Wertigkeit von M³ bedeuten.

Durch die Reaktion von YX⁶X⁷ mit dem Rest X³ wird ein Äquivalent einer Verbindung mit der Formel X⁷X³ unter Knüpfung der Bindung zwischen Z und Y abgespalten. Bevorzugte Verbindungen der Formel YX⁶X⁷ sind monosubstituierte Amine und Alkohole bzw. deren Organometallderivate, besonders bevorzugt sind Methylamin, Ethylamin, tert.-Butylamin und Phenylamin. Wird bei der Reaktion eine Säure frei (d.h. X⁷ ist ein Wasserstoff), so wird dem Reaktionsgemisch üblicherweise eine Base zugesetzt.

Die Reaktion wird in der Regel in Lösung durchgeführt, wobei die Verwendung von etherischen Lösungsmitteln wie Diethylether oder THF bevorzugt ist. Die Reihenfolge der Zugabe ist an sich unkritisch. Bevorzugt ist, die Verbindung (Va), (Va') oder (Vb) im Lösungsmittel vorzulegen und die Verbindung YX⁶X⁷ in Substanz, in Lösung oder in Form eines Hydrosalzes (z.B. eines Hydrochlorids), das dann durch eine starke Base in die korrespondierende Base umgewandelt wird, dazuzugeben. Dies kann bei Temperaturen von -100 bis +100°C, bevorzugt von -80 bis +70°C erfolgen. Bei der Verwendung von Aminen hat es sich als vorteilhaft erwiesen, das Amin in doppeltem Überschuß einzusetzten, da es dann gleichzeitig als Base wirkt.

Die so erhaltenen Verbindungen (VIa), (VIa') oder (VIb) können nach bekannten Methoden zu den entsprechenden Metallkomplexen umgesetzt werden. Die Komplexierungsmethoden sind z.B. in EP-A 416 815, EP-A 420 436 oder Okuda et al., Organometallics, 1995, 14, 789-795 beschrieben. Bevorzugt werden die Verbindungen (VIa), (VIa') oder (VIb) mit X⁶ = Li eingesetzt. Die Umsetzung kann beispielsweise mit vierfachsubstituierten Ti-, Zr- oder Hf-Verbindungen erfolgen. Bevorzugte Metalle sind hierbei Titan und Zirkonium. Als Substituenten werden bevorzugt Halogene, insbesondere Chlor eingesetzt. Die Tetrahalogenide können auch in Form von Basenaddukten (z. B. mit THF) verwendet werden.

Die Reaktion wird in der Regel in Lösung durchgeführt, wobei die Verwendung von etherischen Lösungsmitteln wie Diethylether oder THF bevorzugt ist. Die Reihenfolge der Zugabe ist an sich unkritisch. Bevorzugt ist, die Verbindung (VIa), (VIa') oder (VIb) im Lösungsmittel vorzulegen und die Metallverbindung in Substanz oder in Lösung dazuzugeben. Dies kann bei Temperaturen von -100 bis +100°C, bevorzugt von -80 bis +30°C erfolgen.

Die erfindungsgemäßen Übergangsmetallkomplexe (Ia), (Ia') und (Ib) zeichnen sich durch eine asymmetrische Anordnung der Liganden am Metallatom aus. Bedingt durch diese Struktur können die Übergangsmetallkomplexe (Ia) , (Ia') und (Ib) nicht in einer meso-Form vorliegen. Infolge der unsymmetrischen Substitution am Cyclopentadienylliganden erfolgt die Polymerisation jedoch stereoselektiv.

Weiterhin betrifft die vorliegende Erfindung die zur Herstellung der erfindungsgemäßen Übergangsmetallkomplexe (Ia') eingesetzten Zwischenprodukte der allgemeinen Formel (VIa') 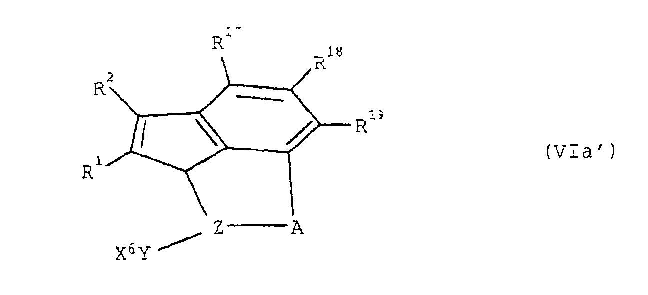 in der die Substituenten und Indizes folgende Bedeutung haben:
- R¹, R² und R¹⁷ bis R¹⁹: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei zwei benachbarte Reste jeweils mit den sie verbindenden Atomen einen 5 bis 15 C-Atome aufweisenden gesättigten oder ungesättigten Ring bilden können, oder Si(R⁴)₃ mit
- R⁴: C₁-C₁₀-Alkyl, C₃-C₁₀-Cycloalkyl oder C₆-C₁₅-Aryl,
- X⁶: Wasserstoff oder einen Rest der Formel M³R²³₍ₚ₋₁₎, in der
- M³: ein Element der 1. - 4. Hauptgruppe des Periodensystems,
- R²³: ein Halogen, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²³ gleich oder verschieden sein können, und
- p: die Wertigkeit von M³ bedeuten,
- Y: für ―O―, ―S―, 〉NR⁷ oder 〉PR⁷ steht, wobei
- R⁷: C₁-C₁₀-Alkyl, C₆-C₁₅-Aryl, C₃-C₁₀-Cycloalkyl oder C₇-C₁₈-Alkylaryl oder einfach oder mehrfach mit Si(R⁸)₃, SR⁸, OR⁸, 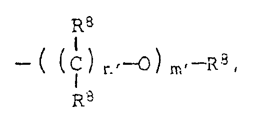 OSi (R⁸)₃, N(R⁸)₂, P(R⁸)₂ oder einer Kombination davon substituiertes C₁-C₁₀-Alkyl, C₆-C₁₅-Aryl, C₃-C₁₀-Cycloalkyl oder C₇-C₁₈-Alkylaryl oder Si(R⁸)₃ ist mit
- n' und m': jeweils 1, 2, 3 oder 4 und
- R⁸: Wasserstoff, C₁-C₁₀-Alkyl, C₆-C₁₅-Aryl, das seinerseits mit C₁-C₄-Alkylgruppen substituiert sein kann, oder C₃-C₁₀-Cycloalkyl,
wobei die Reste R⁸ gleich oder verschieden sind,
- Z: 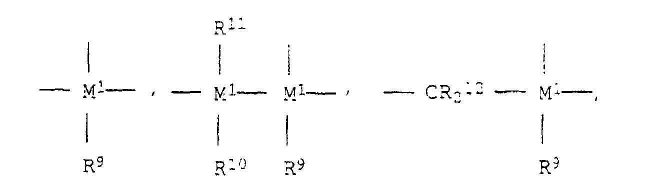 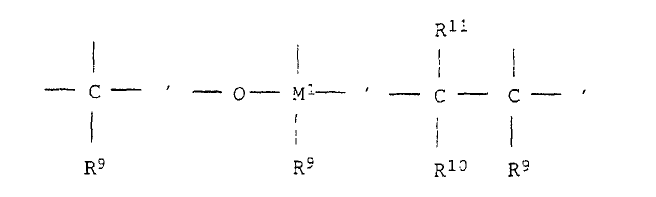 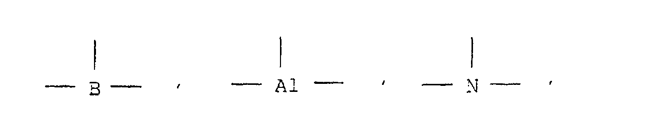 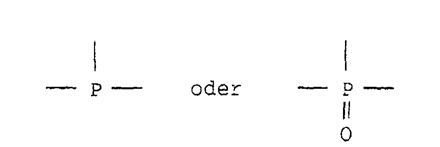
ist,
wobei
- R⁹ bis R¹²: jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M¹: Silicium, Germanium oder Zinn ist, und
- A: ein Brückenglied -(A²)ₘ- mit
- m: von 1 bis 6 und
- A²: 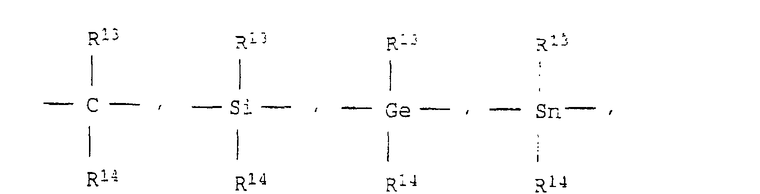 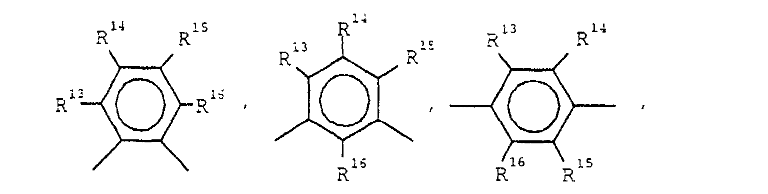 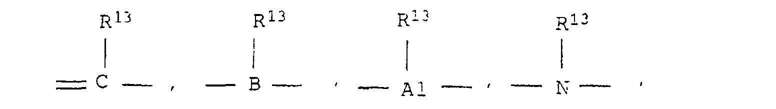 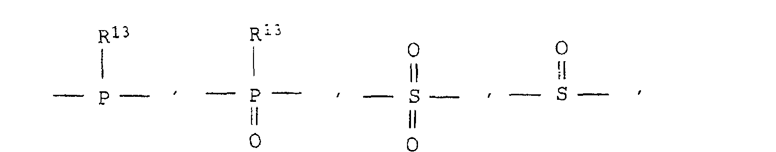 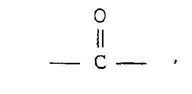 -O- oder -S- bedeutet,
wobei die einzelnen Glieder A² von A gleich oder verschieden sind.

Ferner betrifft die vorliegende Erfindung auch die zur Herstellung der erfindungsgemäßen Übergangsmetallkomplexe Ia' eingesetzten Zwischenprodukte der allgemeinen Formel (IVa') 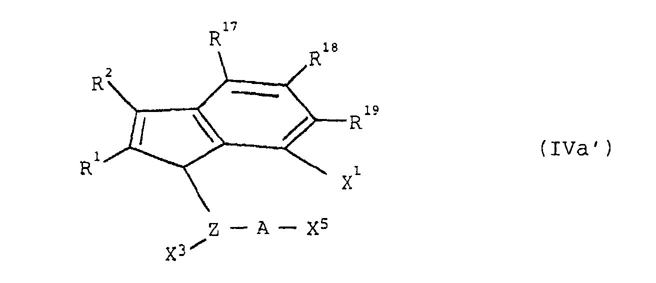 in der die Substituenten und Indizes folgende Bedeutung haben:
- R¹, R² und R¹⁷ bis R¹⁹: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei zwei benachbarte Reste jeweils mit den sie verbindenden Atomen einen 5 bis 15 C-Atome aufweisenden gesättigten oder ungesättigten Ring bilden können, oder Si(R⁴)₃ mit
- R⁴: C₁-C₁₀-Alkyl, C₃-C₁₀-Cycloalkyl oder C₆-C₁₅-Aryl,
- X¹: Wasserstoff oder ein Halogen,
- X³: ein Halogen und
- X⁵: Wasserstoff, ein Halogen oder eine Gruppe 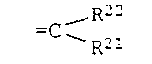 mit
- R²¹ und R²²: jeweils Wasserstoff, C₁-C₁₀-Alkyl, C₃-C₁₀-Cycloalkyl oder C₆-C₁₅-Aryl,
- Z: 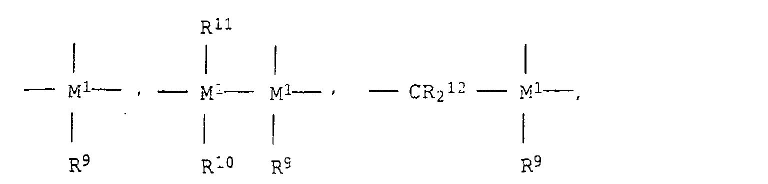 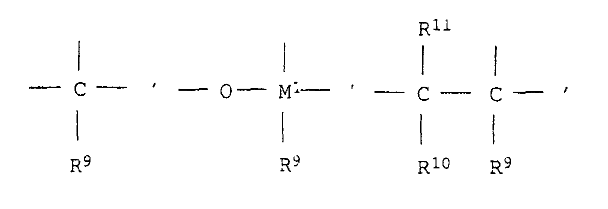 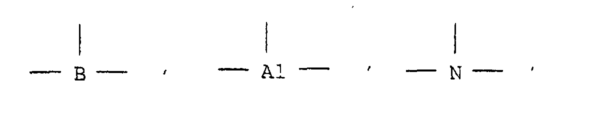 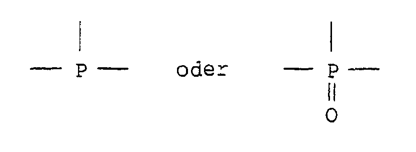 ist,
wobei
- R⁹ bis R¹²: jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂ -C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbinden den Atomen einen 4 bis 15 C-Atome aufweisenden gesättigten oder ungesättigten Ring bilden, und
- M¹: Silicium, Germanium oder Zinn ist, und
- A: ein Brückenglied -(A²)ₘ- mit
- m: von 1 bis 6 und
- A²: 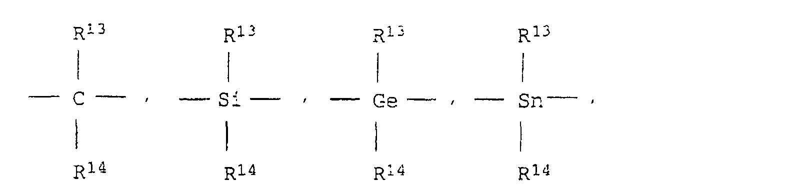 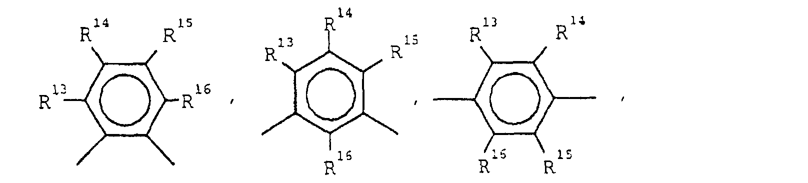 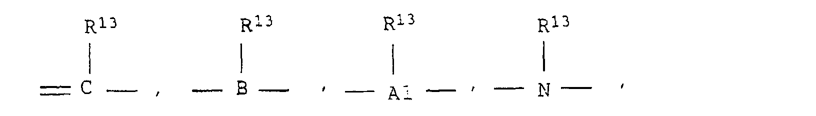 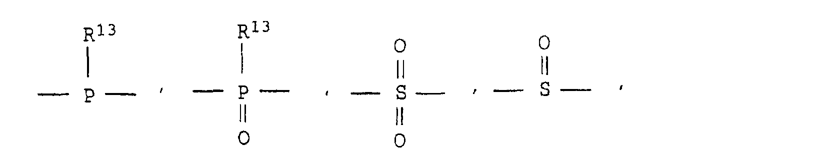 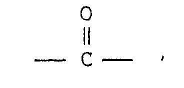 -O- oder -S- bedeutet,
wobei die einzelnen Glieder A² von A gleich oder verschieden sind.

Die erfindungsgemäßen Übergangsmetallkomplexe eigenen sich beispielsweise zur Polymerisation von Olefinen und insbesondere zur Polymerisation von α-Olefine, d.h. Kohlenwasserstoffen mit endständigen Doppelbindungen. Geeignete Monomere können funktionalisierte olefinisch ungesättigte Verbindungen wie Ester- oder Amidderivate der Acryl- oder Methacrylsäure, beispielsweise Acrylate, Methacrylate oder Acrylnitril sein. Bevorzugt sind unpolare olefinische Verbindungen, worunter auch arylsubstituierte α-Olefine wie Styrol fallen. Besonders bevorzugte α-Olefinen sind lineare oder verzweigte C₂-C₁₂-Alk-1-ene, insbesondere lineare C₂-C₁₀-Alk-1-ene wie Ethylen, Propylen, But-1-en, Pent-1-en, Hex-1-en, Hept-1-en, Oct-1-en, Non-1-en, Dec-1-en oder 4-Methyl-pent-1-en. Es können auch Gemische aus diesen Monomeren polymerisiert werden.

Die vorliegende Erfindung betrifft weiterhin ein Verfahren zur Polymerisation von Olefinen, das dadurch gekennzeichnet ist, daß die Polymerisation in Gegenwart von Übergangsmetallkomplexen der Formeln (Ia), (Ia') oder (Ib) und metalloceniumionenbildende Verbindungen durchgeführt wird.

Geeignete metalloceniumionenbildende Verbindungen sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (VII)

M⁴X⁸X⁹X¹⁰ (VII)

bevorzugt, in der
- M⁴: ein Element der III. Hauptgruppe des Periodensystems bedeutet, insbesondere B, Al oder Ga, vorzugsweise B,
- X⁸, x⁹ und X¹⁰: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel (VII), in der X⁸, X⁹ und X¹⁰ gleich sind, vorzugsweise Tris(pentafluorphenyl)boran.

Als ionische Verbindungen mit lewissauren Kationen sind Verbindungen der allgemeinen Formel (VIII)

[(Y₁^{a+})Q₁Q₂...Q_{z}]^{d+} (VIII)

geeignet, in denen
- Y₁: ein Element der I. bis VI. Hauptgruppe oder der I. bis VIII. Nebengruppe des Periodensystems bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an im erfindungsgemäßen Verfahren eingesetzten starken, neutralen Lewissäuren, ionischen Verbindungen mit lewissauren Kationen oder ionischen Verbindungen mit Brönsted-Säuren als Kationen beträgt bevorzugt von 0,1 bis 10 Äquivalente, bezogen auf den Übergangsmetallkomplex (Ia), (Ia') oder (Ib).

Besonders geeignet als metalloceniumionenbildende Verbindungen sind offenkettige oder cyclische Alumoxanverbindungen der allgemeinen Formeln (IX) oder (X) 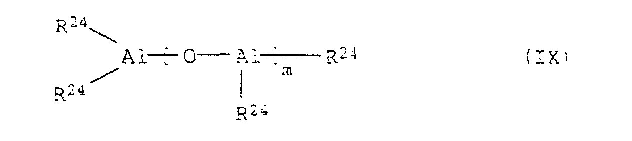 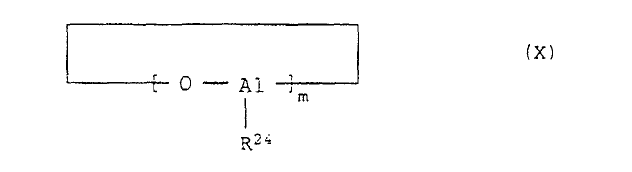 wobei
- R²⁴: eine C₁-C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Übergangsmetallkomplexe (Ia), (Ia') oder (Ib) und die oligomeren Alumoxanverbindungen der allgemeinen Formeln (IX) oder (X) in solchen Mengen zu verwenden, daß das atomare Verhältnis zwischen Aluminium aus den oligomeren Alumoxanverbindungen und dem Übergangsmetall aus den Übergangsmetallkomplexen im Bereich von 10:1 bis 10⁶:1, insbesondere im Bereich von 10:1 bis 10⁴:1, liegt.

Weiterhin können als metalloceniumionenbildende Verbindungen anstelle der Alumoxanverbindungen der allgemeinen Formeln (IX) oder (X) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Vorzugsweise werden im erfindungsgemäßen Verfahren sowohl die Übergangsmetallkomplexe (Ia), (Ia') oder (Ib) als auch die metalloceniumionenbildende Verbindungen in Lösung eingesetzt, wobei aromatische Kohlenwasserstoffe mit 6 bis 20 C-Atomen, insbesondere Xylole und Toluol, besonders bevorzugt sind.

Als weitere Komponente können zusätzlich noch Metallverbindungen der allgemeinen Formel (XI)

M⁵ (R²⁵)ᵣ (R²⁶) ₛ (R²⁷)ₜ (XI)

in der
- M⁵: ein Alkali-, ein Erdalkalimetall oder ein Metall der III. Hauptgruppe des Periodensystems, d.h. Bor, Aluminium, Gallium, Indium oder Thallium bedeutet,
- R²⁵: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R²⁶ und R²⁷: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M⁵ entspricht,
eingesetzt werden.

Von den Metallverbindungen der allgemeinen Formel (XI) sind diejenigen bevorzugt, in denen
- M⁵: Lithium, Magnesium oder Aluminium bedeutet und
- R²⁶ und R²⁷: für C₁-C₁₀-Alkyl stehen.

Besonders bevorzugte Metallverbindungen der Formel (XI) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn eine Metallverbindung der Formel (XI) eingesetzt wird, ist sie bevorzugt in einer solchen Menge im Katalysatorsystem enthalten, daß das molare Verhältnis von M⁵ aus Formel (XI) zu Übergangsmetall M aus Formel (Ia), (Ia') oder (Ib) von 800:1 bis 1:1, insbesondere 500:1 bis 50:1, beträgt.

Die Übergangsmetallkomplexe (Ia), (Ia') oder (Ib) können im erfindungsgemäßen Polymerisationsverfahren auch auf einem Trägermaterial eingesetzt werden.

Als Trägermaterialien werden vorzugsweise feinteilige Träger eingesetzt, die im allgemeinen einen Teilchendurchmesser im Bereich von 1 bis 300 µm aufweisen, insbesondere von 20 bis 90 µm. Geeignete Trägermaterialien sind beispielsweise anorganische Oxide des Siliciums, des Aluminiums, des Titans oder eines der Metalle der I. oder II. Hauptgruppe des Periodensystems oder Mischungen dieser Oxide, von denen außer Aluminiumoxid oder Magnesiumoxid oder einem Schichtsilikat insbesondere Kieselgel bevorzugt ist.

Der Träger kann einer thermischen Behandlung z.B. zur Entfernung von adsorbiertem Wasser unterzogen werden, wobei eine solche Behandlung in der Regel bei Temperaturen im Bereich von 80 bis 200°C, vorzugsweise von 100 bis 150°C, durchgeführt wird, oder er kann calciniert werden. Der Träger kann auch chemisch behandelt werden, wobei in der Regel übliche Trocknungsmittel wie Metallalkyle, bevorzugt Aluminiumalkyle, Chlorsilane oder SiCl₄ zum Einsatz kommen.

Geeignete Träger sind auch feinteilige Polyolefine, beispielsweise feinteiliges Polypropylen.

Das erfindungsgemäße Verfahren kann in den üblichen, für die Polymerisation von Olefinen verwendeten Reaktoren entweder diskontinuierlich oder vorzugsweise kontinuierlich erfolgen. Geeignete Reaktoren sind unter anderem kontinuierlich betriebene Rührkessel, gerührte Pulverbettreaktoren, Schleifen- oder Wirbelschichtreaktoren, wobei man gegebenenfalls auch eine Reihe von mehreren hintereinandergeschalteten, gleich- oder verschiedenartigen Reaktoren verwenden kann. Die Polymerisationsreaktionen lassen sich in der Gasphase, in Suspension, in flüssigen und in überkritischen Monomeren oder in inerten Lösungsmitteln durchführen.

Die Polymerisationsbedingungen sind an sich unkritisch. Drücke von 1 bis 3500 bar, vorzugsweise von 2 bis 100 bar und insbesondere von 10 bis 40 bar sowie Temperaturen von 0 bis 400°C, vorzugsweise von 20 bis 250°C und insbesondere von 50 bis 100°C haben sich als geeignet erwiesen.

Die mittlere Molmasse der Polymerisate kann mit den in der Polymerisationstechnik üblichen Methoden gesteuert werden, beispielsweise durch Zufuhr von Reglern wie Wasserstoff.

Besonders bevorzugt lassen sich mit den erfindungsgemäßen Übergangsmetallkomplexen Homo- oder Copolymerisate des Ethylens oder des Propylens mit anderen C₂-C₁₂-Alk-1-enen herstellen.

Die mit den Übergangsmetallkomplexen (Ia), (Ia') oder (Ib) erhältlichen Homo- oder Copolymerisate des Propylens mit anderen C₂-C₁₂-Alk-1-enen sind besonders bevorzugt Homopolymerisate des Propylens oder Copolymerisate des Propylens mit Ethylen und/oder But-1-en. Die Copolymerisate des Propylens können statistisch aufgebaut sein. Sie können jedoch auch in Form der sogenannten Block- oder Impactcopolymerisate vorliegen. Die Homo- oder Copolymerisate des Propylens zeichnen sich durch eine hohe Molmasse und insbesondere durch einen isotaktischen Aufbau der Polymerketten aus.

Die mit den Übergangsmetallkomplexen (Ia), (Ia') oder (Ib) erhältlichen Homo- oder Copolymerisate des Ethylens mit anderen C₂-C₁₂-Alk-1-enen sind besonders bevorzugt Homopolymerisate des Ethylens oder Copolymerisate des Ethylens mit Propylen, But-1-en, Hex-1-en und/oder Oct-1-en. Die Homo- oder Copolymerisate des Ethylens zeichnen sich durch eine sehr hohe Molmasse aus. Da bei ihrer Herstellung ein hoher Comonomereinbau zu beobachten ist, sind Copolymerisate mit einem hohen Comonomergehalt zugänglich oder es ist möglich, mit einem Monomerengemisch, das einen relativ geringen Comonomergehalt aufweist und somit bei der Polymerisation verfahrenstechnische Vorteile bringt, zu den gewünschten Copolymerisaten zu gelangen.

Die mit den erfindungsgemäßen Übergangsmetallkomplexen erhältlichen Homo- oder Copolymerisate des Ethylens oder des Propylens mit anderen C₂-C₁₂-Alk-1-enen weisen gute anwendungstechnische Eigenschaften auf und eignen sich zur Herstellung von Fasern, Folien oder Formkörpern.

### Beispiele

### Beispiel 1

### Liganden- und Metallocenkomplex-Synthese

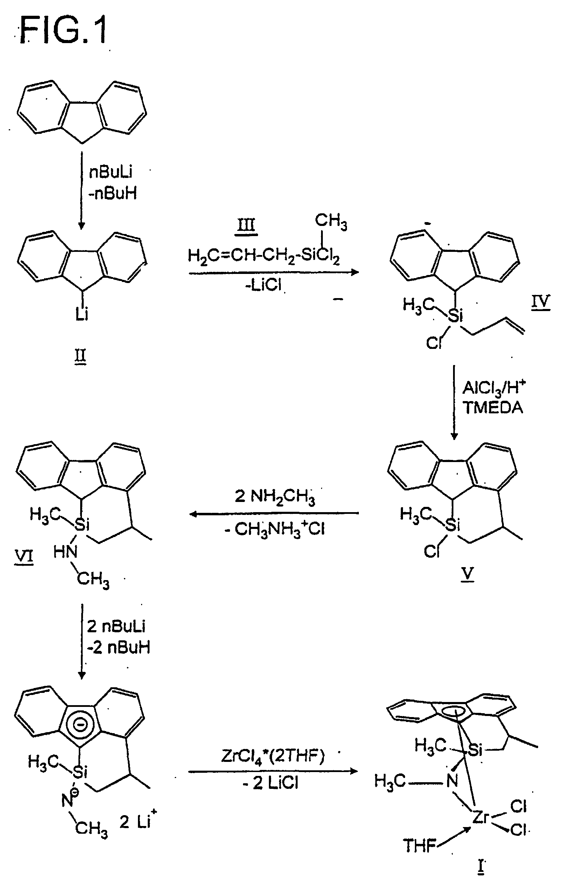

Alle Synthesen wurden unter Ausschluß von Luft und Feuchtigkeit durchgeführt. Die Reagenzien, Lösungsmittel und Apparaturen waren entsprechend voroereitet. Das Reaktionsschema ist in Fig. 1 dargestellt.

### a) Synthese von Fluorenyllithium (Verbindung II)

Zu einer Lösung von 25 g (0,15 mol) Fluoren in 220 ml Diethylether wurden unter Rühren 113 ml einer 1,6 M Lösung von n-Butyllithium in Hexan (0,18 mol) zugegeben. Zur vollständigen Reaktion wurde 6 h unter Rückfluß gekocht und dann über Nacht bei Zimmertemperatur gerührt. Anschließend entfernte man das Lösungsmittel im Vakuum, wusch das erhaltene gelbe Pulver mehrmals mit Pecrolether und trocknete es im Vakuum. Man erhielt Fluorenyllithium (Verbindung II) in fast quantitativer Ausbeute.

### b) Synthese von Allylchlorfluorenylmethylsilan (Verbindung IV)

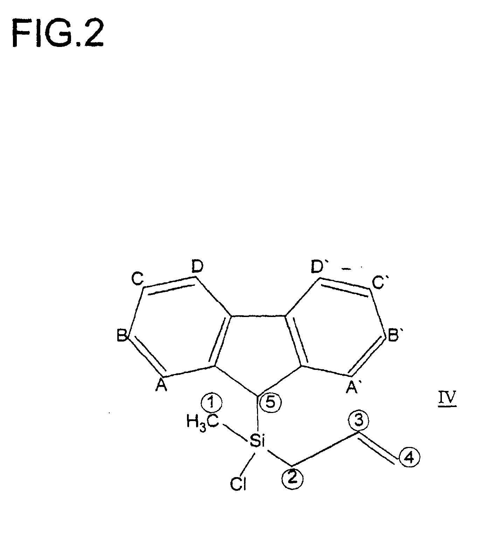

8,6 g (50 mmol) von Verbindung II wurden in 250 ml Diethylether gelöst. Dazu gab man bei Zimmertemperatur unter Rühren 11,1 g (72 mmol) Allyldichlorsilan (Verbindung III). Es wurde weitere 3 h bei Zimmertemperatur gerührt. Anschließend wurde das Lösungsmittel vollständig im Vakuum entfernt und der Rückstand in 200 ml Petrolether aufgenommen. Man zentrifugierte das Lithiumchlorid ab, engte die überstehende Lösung auf ein Volumen von ca. 20 ml ein und kristallisierte das Reaktionsprodukt bei -78 °C. Die Ausbeute betrug 8,59 g (60,4%).
¹H-NMR (CDCl₃) δ (ppm): 0.29 (s, 3H, Pos.1), 1.56 (AB-System, 2H, Pos.2), 4.16 (s, 1H, Pos.5), 4.83 (dm, 1H, Pos.4), 4.86 (dm, 1H, Pos.4), 5.49 (m, 1H, Pos.3), 7.35 (m, 2H, Pos.B,B',C,C'), 7.41 (t, 2H, Pos.B,B',C,C'), 7.69 (m, 2H, Pos.A,A',D,D'), 7.87 (d, 2H, Pos.A,A',D,D')
Die Zuordnung der NMR-Signale kann Fig. 2 entnommen werden.

### c) Synthese von 10-Chlor-10,12-dimethyl-9,1-silapropanofluoren (Verbindung V)

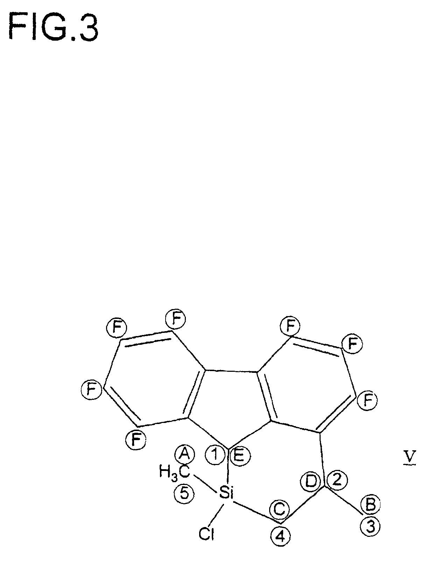

8,59 g (30 mmol) von Verbindung IV wurden in 150 ml Benzol gelöst. Diese Lösung wurde unter Rühren zu einer Suspension aus 4,5 g (34 mmol) Aluminiumchlorid und 150 ml Benzol, die mit einem Tropfen 37%ige HCl versetzt war, zugegeben. Man rührte 3 h bei Zimmertemperatur und gab dann 6 ml (4,68 g, 40 mmol) Tetraethylmethylendiamin (TMEDA) hinzu, worauf der sich bildende Aluminiumchlorid-TMEDA-Komplex ausfiel. Die überstehende Lösung wurde abdekantiert, das Lösungsmittel im Vakuum entfernt und der Rückstand in 200 ml Petrolether aufgenommen. Die ungelösten Bestandteile wurden durch Zentrifugieren abgetrennt, die überstehende Lösung auf ca. 30 ml eingeengt und bei -78 °C kristallisiert. Die erhaltene Substanz wurde aus Petrolether umkristallisiert. Man erhielt einen weißen Feststoff. Die Ausbeute betrug 2,31 g (27 %).
¹H-NMR (CDCl₃) δ (ppm): -0.45 (s, 3H, Pos.5), 0.52-0.59 (m, 2H, Pos.4), 1.35 (s, 3H, Pos.3), 2.95 (sept, 1H, Pos.2), 3.75 (s, 1H, Pos.1), 7.05-7.85 (m, 7H, arom.H)
¹³C-NMR (CDCl₃) δ (ppm): -2.41 (q, J=123.2Hz, Pos.A), 20.4 (q, J=125.9Hz, Pos.B), 25.5 (t, Pos.C), 31.7 (d, J=122.7Hz, Pos.D), 40.6 (d, J=129Hz, Pos.E), 118.4, 120.8, 121.9, 124.4, 126.6, 127.2, 128.0 (d, J=160Hz, Pos.F), 140.4, 140.5, 141.5, 142.1, 143.9 (s, quartäre C-Atome)
Die Zuordnung der NMR-Signale kann Fig. 3 entnommen werden. Massenspektrometrie (EI, 1mA, 70 eV) (m/z, rel. Int.): [M⁻] (284, 43); [M- C₃H₆⁻] (242, 100)
CH-Analyse: C: ber.: 71.68, gef.: 71.75; H: ber. : 6.01, gef.: 5.94

### d) Synthese von 10-Methyl-10-methylamino-12-methyl-9,1-silapropano-fluoren (Verbindung VI)

Durch eine Lösung von 2,31 g (8 mmol) der Verbindung V in 400 ml Diethylether wurde unter Rühren bei Zimmertemperatur für 2 h Methylamin geleitet, das aus Methylammoniumhydrochlorid und Kaliumhydroxid erzeugt und mittels KOH-Plätzchen und Calciumoxid getrocknet wurde. Man rührte weitere 2 h und entfernte dann das Lösungsmittel im Vakuum. Der Rückstand wurde in 200 ml Petrolether aufgenommen. Die ungelösten Bestandteile wurden durch zentrifugieren abgetrennt, die überstehende Lösung eingeengt und es wurde bei -78 °C kristallisiert. Die Ausbeute betrug 1,1 g (49 %).

### e) Synthese des Metallocenkomplexes (Verbindung I)

1,03 g (3,7 mmol) von Verbindung VI wurden in 30 ml Diethylether gelöst und auf -78 °C temperiert. Innerhalb von 20 min gab man 4,62 ml (7,4 mmol) Butyllithium (1,6 M in Heptan) zu, rührte 2 h bei -78 °C und anschließend 2 h bei Zimmertemperatur. Anschließend wurde das Lösungsmittel der orangen Lösung im Vakuum entfernt und der Rückstand in 30 ml THF aufgenommen. Hierzu gab man bei -78 °C innerhalb von 40 min insgesamt 1,79 g (4,75 mmol) festes Zirkoniumtetrachlorid*2THF hinzu. Unter Rühren ließ man langsam auf Zimmertemperatur erwärmen. Anschließend wurde das Lösungsmittel im Vakuum entfernt. Nach Zugabe von Toluol wurde Lithiumchlorid und überschüssiges Zirkoniumtetrachlorid*2THF abgetrennt. Zu der Lösung wurde Petrolether gegeben und es wurde bei -78 °C kristallisiert. Man erhielt einen orangen Feststoff. Die Ausbeute betrug 1,2 g (74 %).

### Beispiel 2

### Trägerung des Metallocenkomplexes

In einem 50 ml-Kolben mit Magnetrührer werden 20 ml Toluol vorgelegt. Dazu wurden 109 mg (0,14 mmol) N,N-Dimethylanilinium-tetrakis(pentafluorphenyl)borat, 60 mg (0,14 mmol) Verbindung I und 2,6 g mit Triisobutylaluminium desaktiviertes Kieselgel (ES 70X, Fa. Crosfield) gegeben. Die erhaltene Mischung wurde für 1 h auf 80 °C erwärmt. Anschließend wurde das Lösungsmittel im Vakuum entfernt. Man erhielt ca. 2,8 g geträgerten Katalysator.

### Beispiel 3

### Ethylenhomopolymerisation

In einem gerührten 1-1-Stahlautoklaven wurden nach sorgfältigem Spülen mit Stickstoff und Temperieren auf die Polymerisationstemperatur von 70°C 400 ml iso-Butan und 170 mg Triethylaluminium vorgelegt. Dann wurden 270 mg des in Beispiel 2 hergestellten, geträgerten Katalysators mit weiteren 6 ml iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Es fielen 30 g Polymerisat in Form eines gut rieselfähigen Grießes an, der eine Viskosität (η-Wert, bestimmt nach ISO 1628-3 bei 135°C in Dekalin) von 10,07 dl/g aufwies.

### Beispiel 4

### Ethylen-Hex-1-en-Copolymerisation

In einem gerührten 1-1-Stahlautoklaven wurden nach sorgfältigem Spülen mit Stickstoff und Temperieren auf die Polymerisationstemperatur von 70°C 500 ml iso-Butan, 120 mg Triethylaluminium und 40 ml Hex-1-en vorgelegt. Dann wurden 50 mg des geträgerten Katalysators mit weiteren 6 ml iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Es fielen 200 g Polymerisat in Form eines gut rieselfähigen Grießes an, der eine Viskosität (η-Wert, bestimmt nach ISO 1628-3 bei 135°C in Dekalin) von 4,23 dl/g und eine Hex-1-engehalt (bestimmt durch IR-Spektroskopie) von 2,1 Gew. -% aufwies.

### Beispiel 5

### Propylenpolymerisation

In einem gerührten 1-l-Stahlautoklaven wurden nach sorgfältigem Spülen mit Stickstoff 500 ml flüssiges Propylen vorgelegt. Dazu wurden 3 ml einer Methylalumoxanlösung (1,53 mol/ in Toluol) gegeben. Anschließend wurde eine Mischung von 5 mg des in Beispiel 1 hergestellten Metallocenkomplexes und weitere 6,5 ml der Methylalumoxanlösung zugegeben. Der Autoklav wurde dann auf 60 °C aufgeheizt. Es stellte sich ein Druck von 26 bar ein. Der Druck wurde durch Nachdosieren von Propen konstant gehalten. Nach 90 min wurde die Polymerisation durch Entspannen des Autoklaven abgebrochen. Es fiel 1 g Polymerisat als weißes Pulver an. Die Schmelztemperatur (bestimmt durch DSC) betrug 148 °C, der mmmm-Pentaden-Anteil (bestimmt durch ¹³C-NMR-Spektroskopie) war 61 % und die Viskosität (η-Wert, bestimmt nach ISO 1628-3 bei 135°C in Dekalin) betrug 3,01 dl/g.

### Beispiel 6

### Liganden-und Metallocenkomplex-Synthese

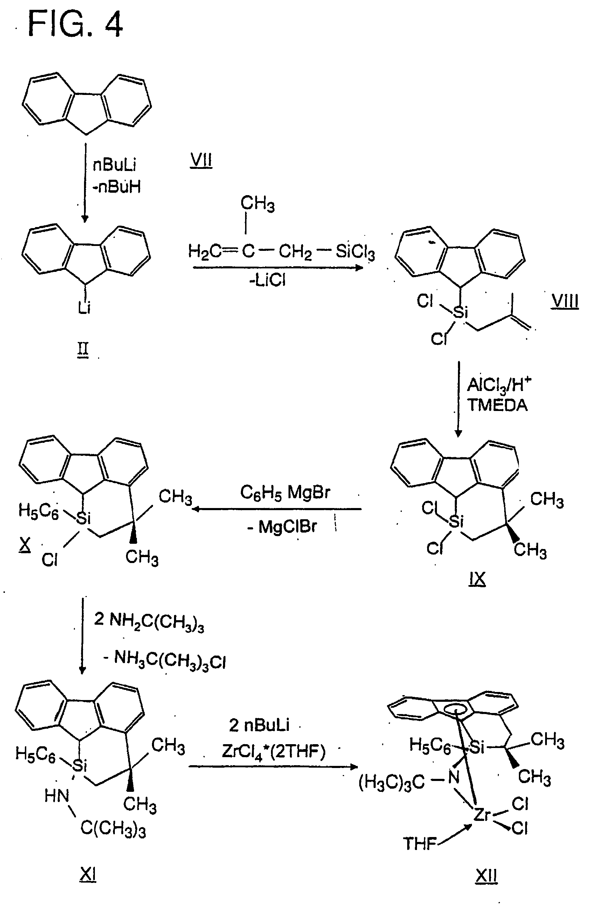

Alle Synthesen wurden unter Ausschluß von Luft und Feuchtigkeit durchgeführt. Die Reagenzien, Lösungsmittel und Apparaturen waren entsprechend vorbereitet. Das Reaktionsschema ist in Fig. 4 dargestellt.

### a) Synthese von Dichlorfluorenyl-β-methallylsilan (Verbindung VIII)

13,01 g (75,14 mmol) Fluorenyllithium (Verbindung II; hergestellt wie in Beispiel 1a) wurden in 250 ml Diethylether gelöst und sehr schnell bei 0°C mit 22,40 g (118,18 mmol) Trichlor-β-methallylsilan (Verbindung VII) versetzt. Nach 30 minütiger Reaktionszeit bei 0°C wurde drei Stunden bei Zimmertemperatur gerührt, dann das Lösungsmittel weitgehend durch Destillation entfernt, das LiCl mit 75 ml Pentan ausgefällt und abzentrifugiert. Die Lösung wurde auf die Hälfte ihres Volumens eingeengt und bei -78°C aufbewahrt. Dabei fiel das Produkt als gelber Feststoff aus, der beim Aufwärmen auf Zimmertemperatur zu einem orangefarbenen viskosen Öl schmolz. Nach mehrfach wiederholter Kristallisation aus Pentan erhielt man 7,1 g (22,24 mmol; 29,6 %) Dichlorfluorenyl-β-methallylsilan.
NMR-spektroskopische Daten
¹H-NMR (C₆D₆, δ in ppm): 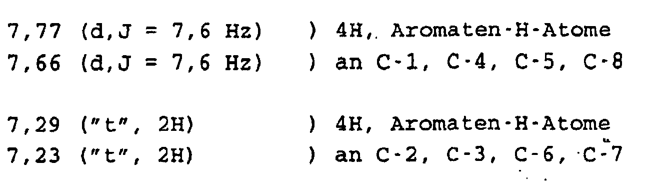 4,57 (s,1H, Olefin-H in γ-Position)
4,31 (s,1H, Olefin-H in γ-Position)
3,97 (s,1H, Allyl-H an C-9)
1,41 (s,2H, Methylen-H-Atome der Allylgruppe)
1,41 (s,3H, Methyl-H-Atome)
¹³C-NMR (C₆D₆, δ in ppm):
143,4 - 120,1 (Aromaten-C-Atome, Olefin-C-Atome)
113,4 (t, Olefin-C-Atom der Allylgruppe, J = 155,9 Hz)
44,3 (d, C-9)
27,2 (t, Methylen-C-Atom der Allylgruppe, J = 122,5 Hz)
24,4 (q, Methyl-C-Atom, J = 126,1 Hz)
CH-Analyse: C: ber.: 64,4, gef.: 67,0; H: ber.: 5,0; gef.: 5,2

### b) Synthese von 10,10-Dichlor-12,12-Dimethyl-9,1-(Silapropano)fluoren (Verbindung IX)

Zu einer Suspension von 1,77 g (13,27 mmol) AlCl₃ in 80 ml Benzol wurden 2 Tropfen einer 37 % HCl-Lösung gegeben. Dazu tropfte man unter Rühren bei Zimmertemperatur eine Lösung von 4,2 g (13,15 mmol) Verbindung VIII in 100 ml Benzol. Nach beendeter Zugabe wurde 90 Minuten gerührt, dann zur Abtrennung des AlCl₃ 2,03 g (17,45 mmol) TMEDA zugegeben. Man destillierte das Benzol aus der zentrifugierten Lösung in Vakuum ab. Der braune ölige Rückstand wurde in 80 ml Petrolether aufgenommen und bei -25°C kristallisiert. Es fielen farblose nadelförmige Kristalle an, die sich aus Petrolether umkristallisieren ließen.
Ausbeute: 2,07 g (6,66 mmol; 50,2 %; Schmelzpunkt: 113-114°C).
NMR-spektroskopische Daten
¹H-NMR (C₆D₆, δ in ppm):
7,69 (m, 2H, Aromaten-H-Atome)
7,56 (d, 1H, J = 7,5 Hz, Aromaten-H-Atome der Positionen 4, 5 oder 8)
7,25(m, 3H, Aromaten-H-Atome)
7,08 (d,1H, J = 7,7 Hz, Aromaten-H-Atome der Positionen 4, 5 oder 8)
3,95 (s,1H, Allyl-H an C-9)
1,21 (AB-System, 2H, diastereotope Methylen-H-Atome des Sechsrings, J_{AB} = 15,5 Hz; V_{A}-V_{B} = 79,4 Hz)
1,22 (s,3H, Methyl-H-Atome)
1,15 (s,3H, Methyl-H-Atome)
¹³C-NMR (C₆D₆, δ in ppm): 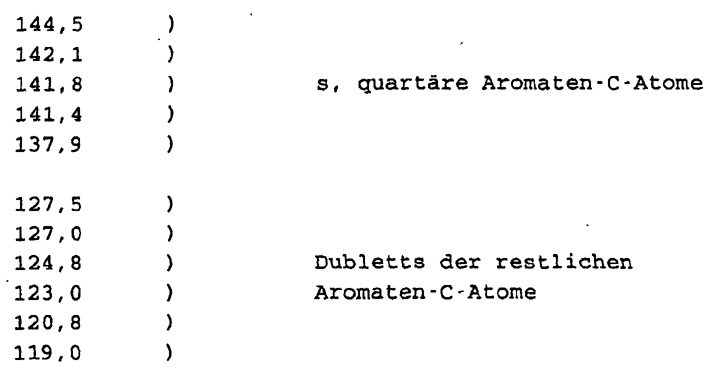 CH-Analyse: C: ber.: 64,0; gef.: 64,5; H: ber.: 5,0; gef.: 5,4.

### c) Umsetzung von Verbindung IX mit Phenylgrignard (C₆H₅-MgBr)

2,5 g (7,83 mmol) der Verbindung IX wurden in THF gelöst. Zu der leicht gelblichen Lösung wurden unter Rühren der in THF gelöste Phenylgrignard bei Raumtemperatur rasch hinzugegeben. Die Reaktionsmischung färbte sich sofort orange. Man ließ über Nacht rühren. Nach Entfernen des Lösungsmittels in Vakuum erhielt man einen orangefarbenen Kristallbrei, der in Petrolether aufgenommen wurde. Es resultierte eine gelbe Petroletherphase, die von einem gelben petroletherunlöslichen Feststoff abzentrifugiert wurde. Die Petroletherphase wurde komplett eingeengt und lieferte ein oranges Öl.

Der unlösliche Feststoff wurde in Toluol aufgenommen und auf etwa 50°C erwärmt. Man erhielt eine gelbe Toluolphase, die von einem weißen Feststoff abzentrifugiert wurde. Aus der Toluolphase erhielt man nach Entfernen des Losungsmittels ebenfalls ein hochviskoses oranges Öl. Aufnahme in Hexan und Erwärmen auf 50°C lieferte abermals eine gelbe Hexanphase und ein unlösliches weißes Pulver. Nach Abzentrifugieren und Einengen lieferte die Hexanphase ein oranges Öl.

Die beiden Produktöle (aus Petroletherphase und Hexanphase) wurde vereinigt und so insgesamt 1,9 g (5,26 mmol, 67,2 %) Verbindung X erhalten.

### d) Umsetzung von Verbindung X mit tert.-Butylamin

Die 1,9 g (5,26 mmol) Verbindung X wurden in ca. 20 ml Diethylether gelöst und die klare gelbe Lösung unter Rühren rasch mit 1,1 ml (10,52 mmol) tert.-Butylamin versetzt. Die Reaktionsmischung wurde dabei milchig trüb. Man ließ über Nacht rühren und entfernte dann den Ether in Vakuum. Aufnahme des Rückstands in Petrolether lieferte nach Zentrifugieren eine gelbe Lösung sowie ein weißes Pulver. Die Petroletherphase wurde komplett eingeengt und lieferte 1,8 g (4,53 mmol, 86 %) Verbindung XI als orangegelbes zähes Öl.

### e) Synthese des Metallocenkomplexes (Verbindung XII)

1,8 g (4,53 mmol) Verbindung XI wurden in ca. 100 ml Ether gelöst und gerührt. Bei Raumtemperatur gab man 5,7 ml (9,1 mmol) n-BuLi hinzu und ließ über Nacht rühren. Die ursprünglich gelbe Etherlösung wurde tiefrot. Nach Entfernen des Ethers in Vakuum verblieb ein orangefarbener Schaum, der zur Reinigung mit Petrolether gewaschen wurde. Man erhielt 750 mg eines orangegelben Pulvers.

Die 750 mg (1,83 mmol) des Dilithiumsalzes von Verbindung XI wurden in 100 ml THF gelöst. Die dunkelbraune Lösung wurde auf -78°C abgekühlt und tropfenweise mit in 40 ml THF gelöstem Zirkoniumtetrachlorid * 2 THF (690 mg, 1,83 mmol) versetzt. Anschließend rührte man zwei Stunden bei tiefer Temperatur und ließ langsam auf Zimmertemperatur erwärmen.

Das Lösungsmittel wurde entfernt und der dunkle Rückstand in Toluol aufgenommen und zentrifugiert. Man erhielt eine tiefrot gefärbte Toluollösung sowie ein unlösliches helles Pulver. Einengen der Toluollösung lieferte ein Öl, welches mit Petrolether zur Reinigung verrührt wird. Nach Abtrennen der Waschphase erhielt man 200 mg (0,35 mmol, 19,5 %) als gelbes Pulver.

### Beispiel 7

### Ethylen-Homopolymerisation

25 mg (0,05 mmol) von Verbindung XII wurden in 200 ml Toluol gelöst und anschließend mit 10,9 ml einer 30 %igen MAO-Lösung in Toluol (1000 Äquivalente) versetzt. Man ließ das Reaktionsgemisch für 30 min bei Zimmertemperatur rühren und leitete dann für 3 h Ethylen durch die Lösung. Man erhielt nach dem Abstoppen der Reaktion mit methanolischer HCl, Waschen des organischen Rückstands mit Toluol und anschließendem Trocknen 0,5 g Polyethylen, das eine Viskosität (η-Wert, bestimmt nach ISO 1628-3 bei 135°C in Dekalin) von 8,95 dl/g aufwies.

### Beispiel 8

### Ethylen-Hex-1-en-Copolymerisation

25 mg (0,05 mmol) von Verbindung XII wurden in 200 ml Toluol gelöst und anschließend mit 10,9 ml einer 30 %igen MAO-Lösung in Toluol (1000 Äquivalente) und 20 ml 1-Hexen versetzt. Man ließ das Reaktionsgemisch für 30 min bei Zimmertemperatur rühren und leitete dann für 6 h Ethylen durch die Lösung. Man erhielt nach dem Abstoppen der Reaktion mit methanolischer HCl, Waschen des organischen Rückstand mit Toluol und anschließendem Trocknen 2,2 g Polyethylen, das eine Viskosität (η-wert, bestimmt nach ISO 1628-3 bei 135°C in Dekalin) von 8,95 dl/g und einen Hexengehalt (bestimmt durch IR-Spektroskopie) von 16,6 Gew.-% aufwies.

## Patentansprüche

1. Übergangsmetallkomplexe der allgemeinen Formeln (Ia) oder (Ib), 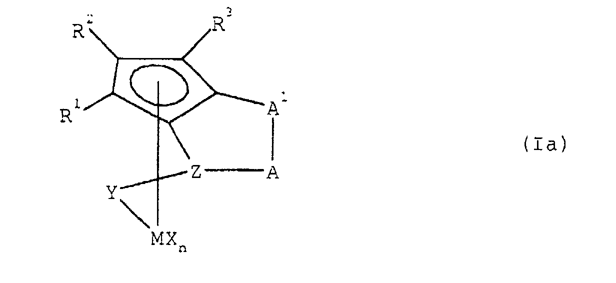 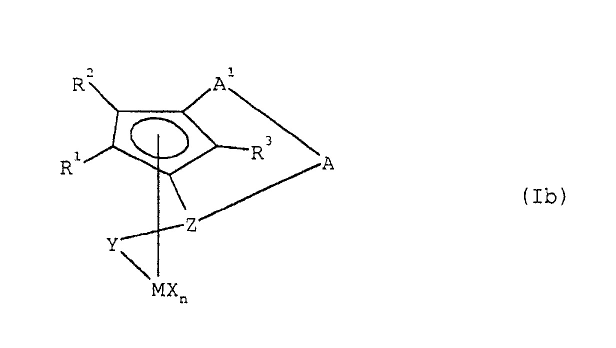 in denen die Substituenten und Indizes folgende Bedeutung haben:
R¹ bis R³ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei die Reste mit benachbarten Resten jeweils mit den sie verbindenden Atomen einen 5 bis 15 C-Atome aufweisenden gesättigten oder ungesättigten Ring bilden können, oder Si(R⁴)₃ mit
R⁴ C₁-C₁₀-Alkyl, C₃-C₁₀-Cycloalkyl oder C₆-C₁₅-Aryl,
M Titan, Zirkonium, Hafnium, Vanadium, Niob oder Tantal oder ein Element der III. Nebengruppe des Periodensystems oder der Lanthanoiden,
X Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁵ oder -NR⁵R⁶,
n 1, 2 oder 3, wobei n der Wertigkeit von M minus der Zahl 2 entspricht,
wobei
R⁵ und R⁶ C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
Y ― O ― , ― S ―, 〉NR⁷ oder 〉PR⁷ bedeutet, wobei
R⁷ C₁-C₁₀-Alkyl, C₆-C₁₅-Aryl, C₃-C₁₀-Cycloalkyl oder C₇-C₁₈-Alkylaryl oder einfach oder mehrfach mit Si(R⁸)₃, SR⁸, OR⁸, 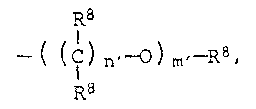 OSi(R⁸)₃, N(R⁸)₂, P(R⁸)₂ oder einer Kombination davon substituiertes C₁-C₁₀-Alkyl, C₆-C₁₅-Aryl, C₃-C₁₀-Cycloalkyl oder C₇-C₁₈-Alkylaryl oder Si(R⁸)₃ ist mit
n' und m' jeweils 1, 2, 3 oder 4 und
R⁸ Wasserstoff, C₁-C₁₀-Alkyl, C₆-C₁₅-Aryl, das seinerseits mit C₁-C₄-Alkylgruppen substituiert sein kann, oder C₃-C₁₀-Cycloalkyl,
wobei die Reste R⁸ gleich oder verschieden sind,
Z eine dreifachverknüpfende Brückengruppe ist und
A und A¹ für zweifachverknüpfende Brückenglieder stehen.

2. Übergangsmetallkomplexe gemäß Anspruch 1, bei denen
Z 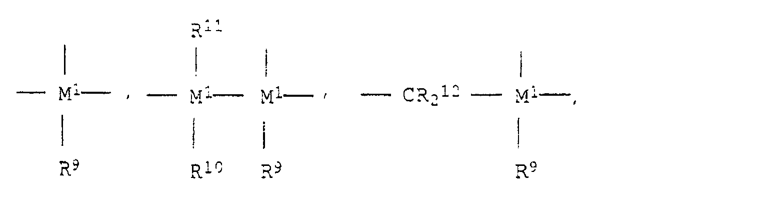 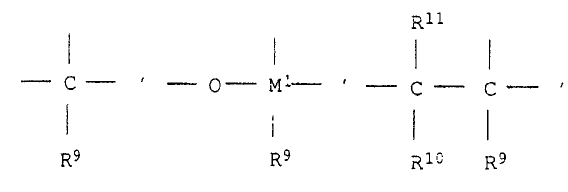 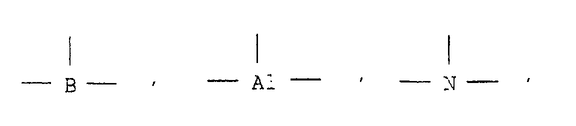 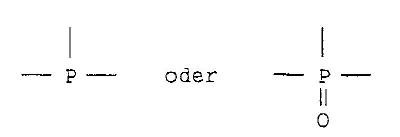
ist,
wobei
R⁹ bis R¹² jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₃-C₄₀-Arylalkenylgruppe oder eine C₇-C₄₀-Alkylarylgruppe bedeuten oder zwei Reste R⁹ bis R¹² mit den sie verbindenden Atomen einen 4 bis 15 C-Atome aufweisenden gesättigten oder ungesättigten Ring bilden, und
M¹ Silicium, Germanium oder Zinn ist,
A ein Brückenglied -(A²)ₘ- mit
m von 1 bis 6 ist,
A¹ und A² 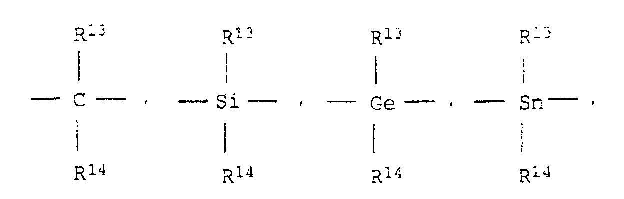 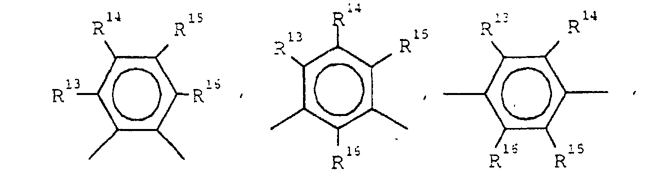 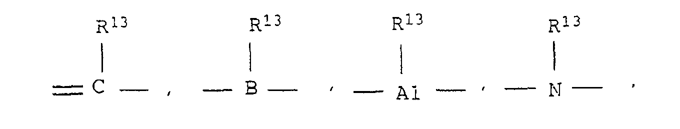 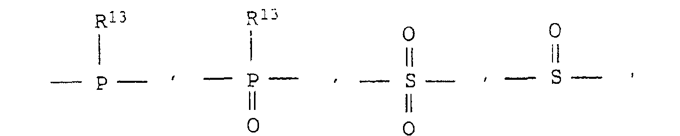 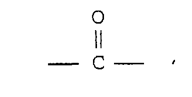 -O- oder -S- bedeuten,
wobei A¹ und die einzelnen Glieder A² von A gleich oder verschieden sind, und
R¹³ bis R¹⁵ gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder wobei zwei benachbarte Reste jeweils mit den sie verbindenden Atomen einen 5 bis 15 C-Atome aufweisenden gesättigten oder ungesättigten Ring bilden, oder
wobei ein Rest R¹³ bis R¹⁶ von A¹ zusammen mit einem benachbarten Rest R² oder R³ ein mit den sie verbindenden Atomen 5 bis 15 C-Atome aufweisendes, gesättigtes oder ungesättigtes Ringsystem bilden.

3. Übergangsmetallkomplexe gemäß Anspruch 1 oder 2, bei denen die Übergangsmetallkomplexe (Ia) der allgemeinen Formel (Ia') entsprachen 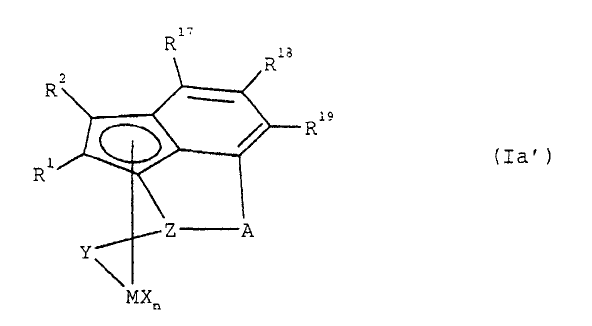 und
R¹⁷ bis R¹⁹ jeweils ein Wasserstoffatom, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe bedeuten, oder wobei zwei benachbarte Reste jeweils mit den sie verbindenden Atomen einen 5 bis 15 C-Atome aufweisenden gesättigten oder ungesättigten Ring bilden, oder Si(R⁴)₃ sind.

4. Verfahren zur Herstellung der Übergangsmetallkomplexe gemäß den Ansprüchen 1 bis 3, **dadurch gekennzeichnet, daß** man Cyclopentadienverbindungen der allgemeinen Formeln (IIa) oder (IIb), 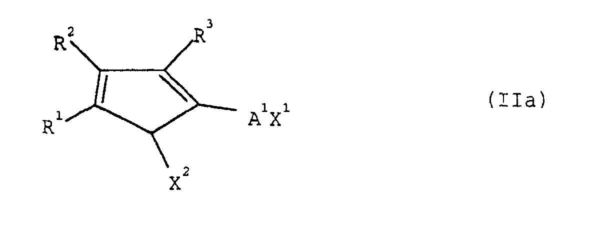 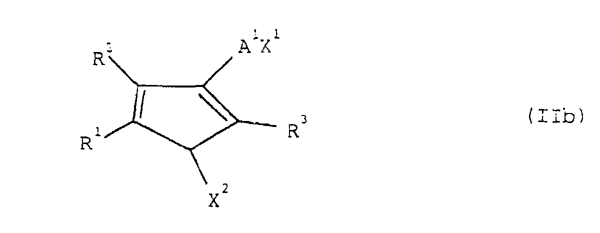 in denen
X¹ für Wasserstoff oder ein Halogen und
X² für Wasserstoff oder einen Rest der Formel M²R²⁰₍ₒ₋₁₎ stehen, in der
M² ein Element der 1. - 4. Hauptgruppe des Periodensystems,
R²⁰ ein Halogen, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²⁰ gleich oder verschieden sein können, und
o die Wertigkeit von M² bedeuten,
mit Verbindungen der allgemeinen Formel (III), 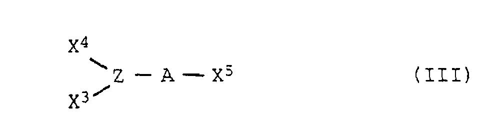 in denen
X³ und X⁴ jeweils für ein Halogen und
X⁵ für Wasserstoff, ein Halogen oder eine Gruppe 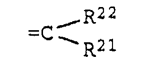 mit
R²¹ und R²² jeweils Wasserstoff, C₁-C₁₀-Alkyl, C₃-C₁₀-Cycloalkyl oder C₆-C₁₅-Aryl stehen,
zu Verbindungen der allgemeinen Formeln (IVa) oder (IVb) umsetzt, 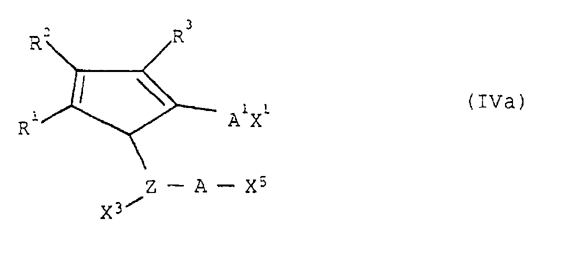 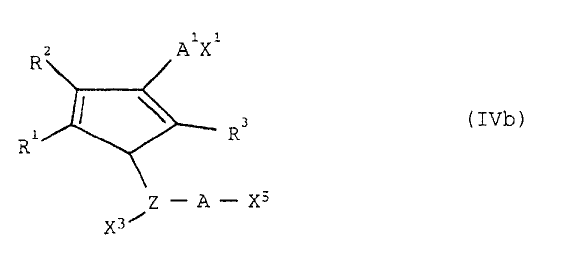 aus diesen durch intramolekularen Ringschluß die Verbindungen der allgemeinen Formeln (Va) oder (Vb) herstellt, 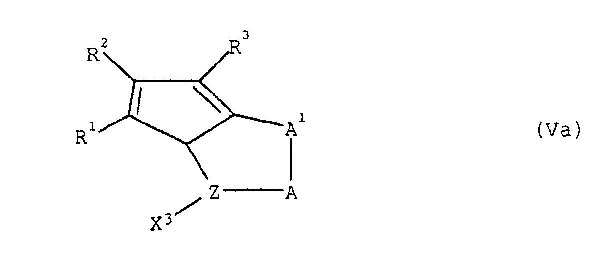 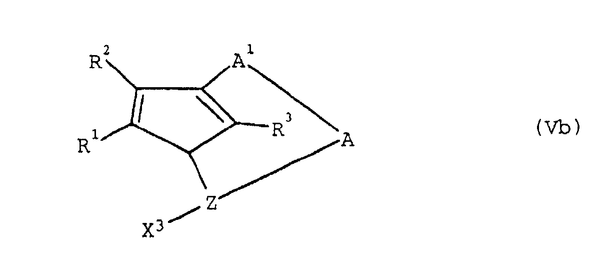 welche zu Verbindungen der allgemeinen Formeln (VIa) oder (VIb) umgesetzt werden, 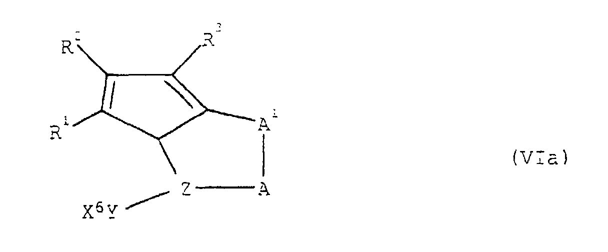 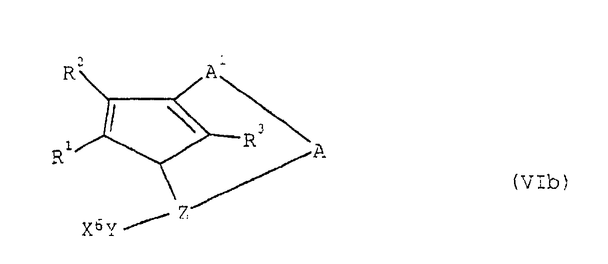 in denen
X⁶ für Wasserstoff oder einen Rest der Formel M³R²³₍ₚ₋₁₎ steht, in der
M³ ein Element der 1. - 4. Hauptgruppe des Periodensystems,
R²³ ein Halogen, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²³ gleich oder verschieden seinkönnen, und
p die Wertigkeit von M³ bedeuten,
und die man dann in die Übergangsmetallkomplexe gemäß den Ansprüchen 1 bis 3 überführt.

5. Verfahren gemäß Anspruch 4, **dadurch gekennzeichnet, daß** man als Cyclopentadienverbindungen der allgemeinen Formel (IIa) Indenverbindungen der allgemeinen Formel (IIa'), 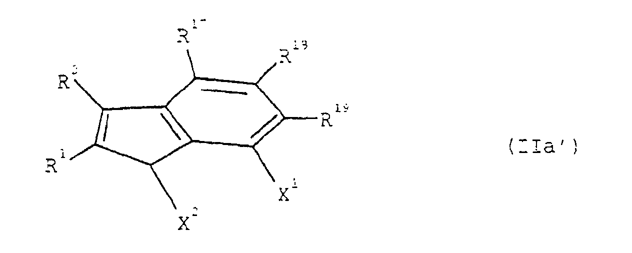 mit einer Verbindung der allgemeinen Formel (III)
zu Verbindungen der allgemeinen Formel (IVa') umsetzt, 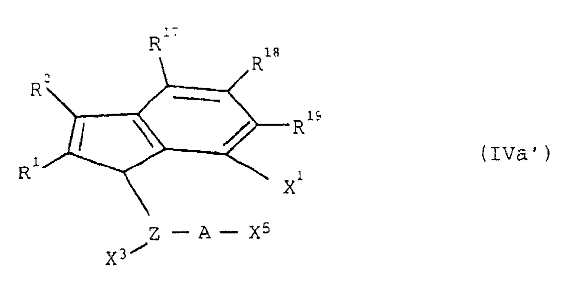 aus diesen durch intramolekularen Ringschluß die Verbindungen der allgemeinen Formel (Va') herstellt, 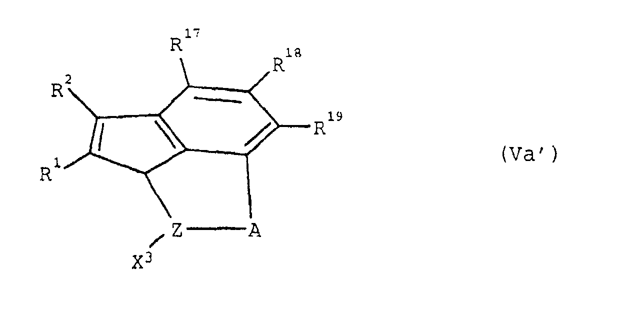 welche zu Verbindungen der allgemeinen Formel (VIa') umgesetzt werden, 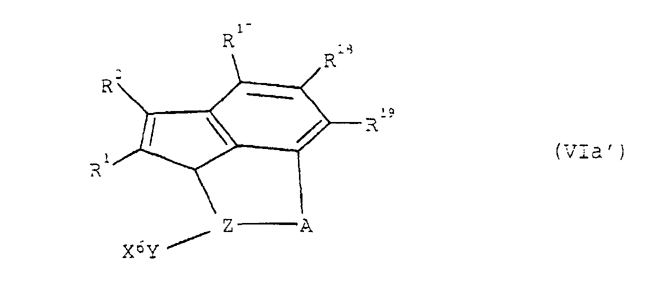 und die man dann in die Übergangsmetallkomplexe gemäß Anspruch 3 überführt.

6. Verbindungen der allgemeinen Formel (VIa'), 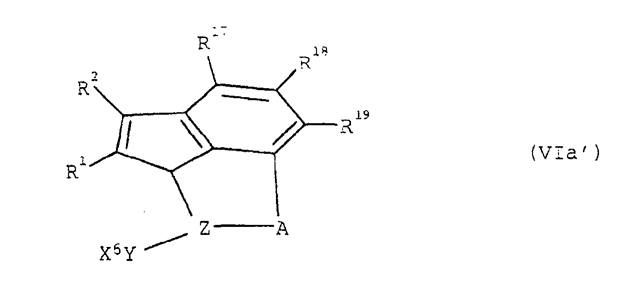 in denen die Substituenten und Indizes folgende Bedeutung haben:
R¹, R² und R¹⁷ bis R¹⁹ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei zwei benachbarte Reste jeweils mit den sie verbindenden Atomen einen 5 bis 15 C-Atome aufweisenden gesättigten oder ungesättigten Ring bilden können, oder Si(R⁴)₃ mit
R⁴ C₁-C₁₀-Alkyl, C₃-C₁₀-Cycloalkyl oder C₆-C₁₅-Aryl,
X⁶ Wasserstoff oder einen Rest der Formel M³R²³₍ₚ₋₁₎, in der
M³ ein Element der 1. - 4. Hauptgruppe des Periodensystems,
R²³ ein Halogen, eine C₁-C₁₀-Alkylgruppe, eine 5- bis 7-gliedrige Cycloalkylgruppe, die ihrerseits durch C₁-C₁₀-Alkyl substituiert sein kann, eine C₆-C₁₅-Arylgruppe oder eine Arylalkylgruppe, wobei die Reste R²³ gleich oder verschieden sein können, und
p die Wertigkeit von M³ bedeuten,
Y für ―O―, ―S―, 〉NR⁷ oder 〉PR⁻ steht, wobei
R⁷ C₁-C₁₀-Alkyl, C₆-C₁₅-Aryl, C₃-C₁₀-Cycloalkyl oder C₇-C₁₈-Alkylaryl oder einfach oder mehrfach mit Si(R⁸)₃, SR⁸, OR⁸, 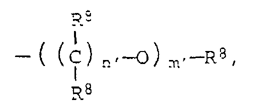 OSi(R⁸)₃, N(R⁸)₃, P(R⁸)₂ oder einer Kombination davon substituiertes C₁-C₁₀-Alkyl, C₆-C₁₅-Aryl, C₃-C₁₀-Cycloalkyl oder C₇-C₁₈-Alkylaryl oder Si(R⁸)₃ ist mit
n' und m' jeweils 1, 2, 3 oder 4 und
R⁸ Wasserstoff, C₁-C₁₀-Akyl, C₆-C₁₅-Aryl, das seinerseits mit C₁-C₄-Alkylgruppen substituiert sein kann, oder C₃-C₁₀-Cycloalkyl,
wobei die Reste R⁸ gleich oder verschieden sind,
Z 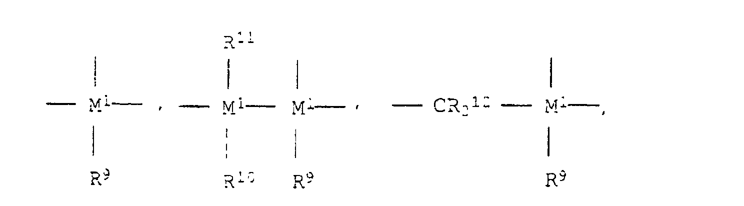 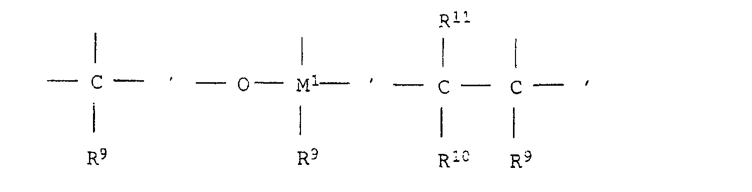 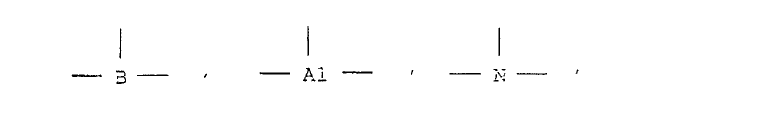 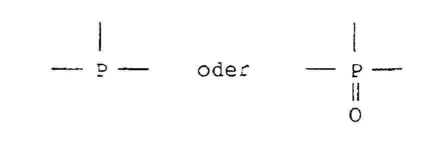 ist,
wobei
R⁹ bis R¹² jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist, und
A ein Brückenglied -(A²)ₘ- mit
m von 1 bis 6 und
A² 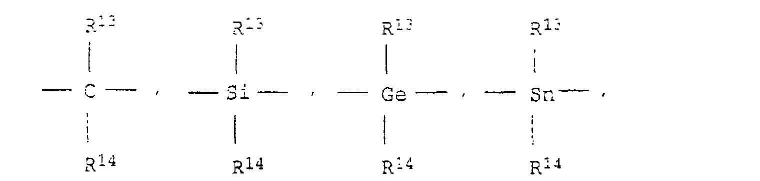 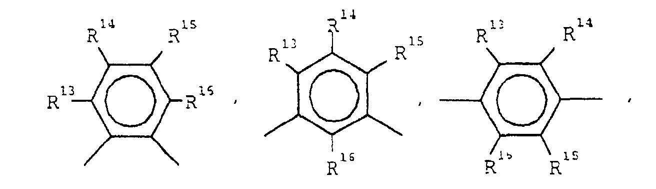 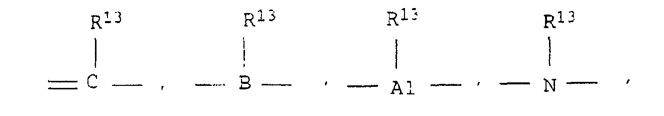 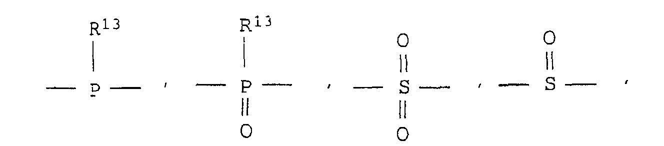 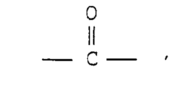 -O- oder -S- bedeutet,
wobei die einzelnen Glieder A² von A gleich oder verschieden sind.

7. Verbindungen der allgemeinen Formel (IVa'), 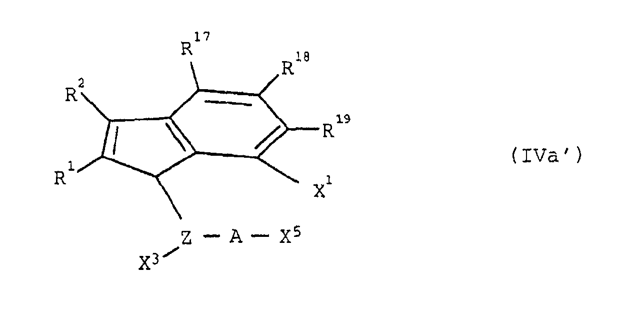 in der die Substituenten und Indizes folgende Bedeutung haben:
R¹, R² und R¹⁷ bis R¹⁹ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei zwei benachbarte Reste jeweils mit den sie verbindenden Atomen einen 5 bis 15 C-Atome aufweisenden gesattigten oder ungesättigten Ring bilden konnen, oder Si(R⁴)₃ mit
R⁴ C₁-C₁₀-Alkyl, C₃-C₁₀-Cycloalkyl oder C₆-C₁₅-Aryl,
X¹ Wasserstoff oder ein Halogen,
X³ ein Halogen und
X⁵ Wasserstoff, ein Halogen oder eine Gruppe 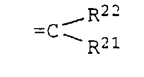 mit
R²¹ und R²² jeweils Wasserstoff, C₁-C₁₀-Alkyl, C₃-C₁₀-Cycloalkyl oder C₆-C₁₅-Aryl,
Z 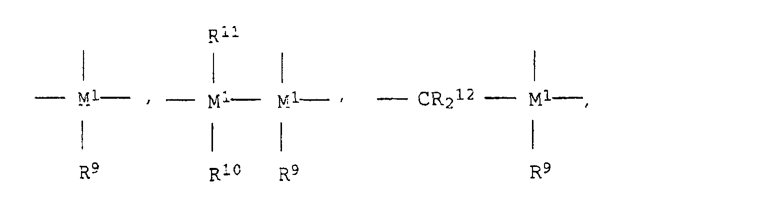 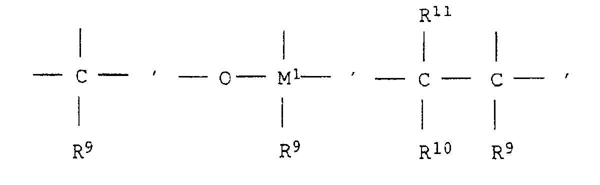 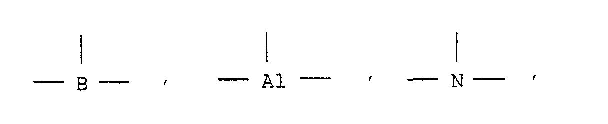 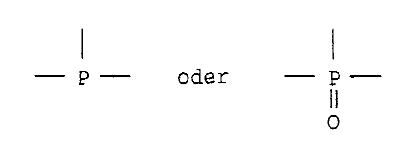 ist,
wobei
R⁹ bis R¹² jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₁-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist, und
A ein Brückenglied -(A²)ₘ- mit
m von 1 bis 6 und
A² 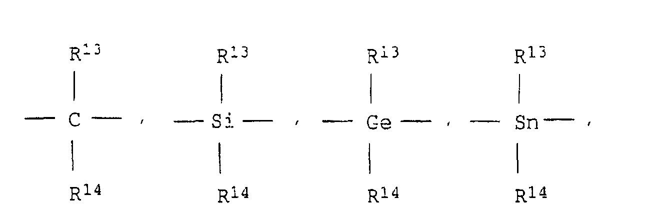 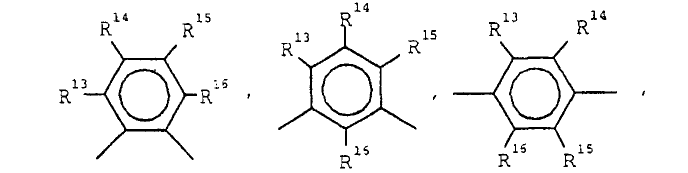 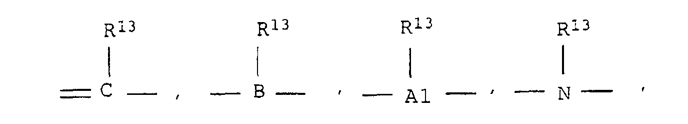 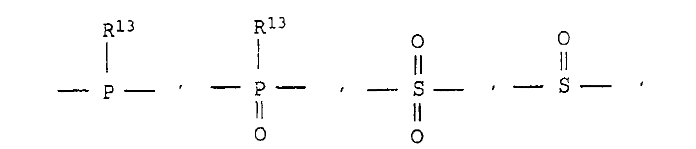 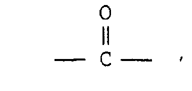 -O- oder -S- bedeutet,
wobei die einzelnen Glieder A² von A gleich oder verschieden sind.

8. Verwendung von Übergangsmetallkomplexen gemäß den Ansprüchen 1 bis 3 zur Polymerisation von Olefinen.

9. Verfahren zur Polymerisation von Olefinen, dadurch gekennezichnet, daß die Polymerisation in Gegenwart von Übergangsmetallkomplexen gemäß den Ansprüchen 1 bis 3 und metalloceniumionenbildenden Verbindungen durchgeführt wird.

## Claims

1. A transition metal complex of the formula (Ia) or (Ib), 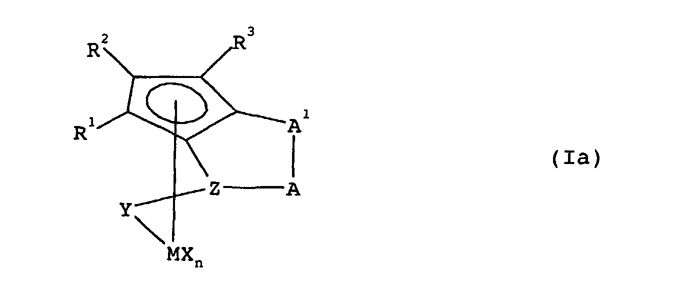 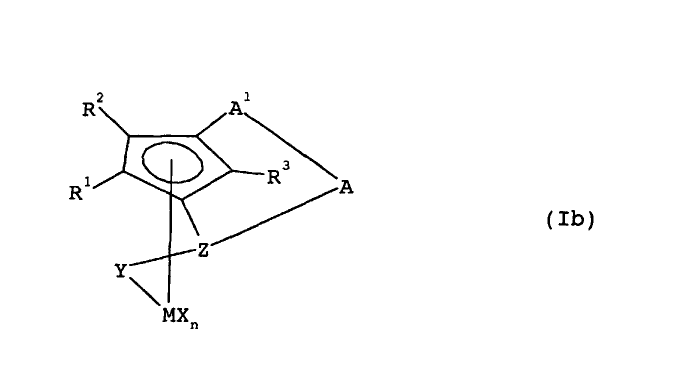 where the substituents and indices have the following meanings:
R¹ to R³ are hydrogen, C₁-C₁₀-alkyl, 5- to 7-membered cycloalkyl, which in turn may be substituted by C₁-C₁₀-alkyl, are C₆-C₁₅-aryl or arylalkyl, where the radicals together with adjacent radicals in each case with the linking atoms may form a saturated or unsaturated ring having 5 to 15 carbon atoms, or are Si(R⁴)₃ where
R⁴ is C₁-C₁₀-alkyl, C₃-C₁₀-cycloalkyl or C₆-C₁₅-aryl,
M is titanium, zirconium, hafnium, vanadium, niobium or tantalum or an element of the IIIrd subgroup of the Periodic Table or of the lanthanoids,
X is fluorine, chlorine, bromine, iodine, hydrogen, C₁-C₁₀-alkyl, C₆-C₁₅-aryl, alkylaryl having 1 to 10 carbon atoms in the alkyl radical and 6 to 20 carbon atoms in the aryl radical, -OR⁵ or -NR⁵R⁶,
n is 1, 2 or 3, where n is the valency of M minus the number 2,
where
R⁵ and R⁶ are C₁-C₁₀-alkyl, C₆-C₁₅-aryl, alkylaryl, arylalkyl, fluoroalkyl or fluoroaryl having in each case 1 to 10 carbon atoms in the alkyl radical and 6 to 20 carbon atoms in the aryl radical and
the radicals X are identical or different,
Y is ―O―, ―S―, 〉NR⁷ or 〉PR⁷, where,
R⁷ is C₁-C₁₀-alkyl, C₆-C₁₅-aryl, C₃-C₁₀-cycloalkyl or C₇-C₁₈-alkylaryl or is C₁-C₁₀-alkyl, C₆-C₁₅-aryl, C₃-C₁₀-cycloalkyl or C₇-C₁₈-alkylaryl, each of which is mono- or polysubstituted by Si(R⁸)₃, SR⁸, OR⁸, 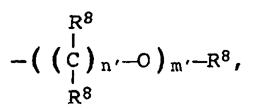 OSi(R⁸)₃, N(R⁸)₂, P(R⁸)₂ or a combination thereof, or is Si(R⁸)₃ where
n' and m' are each 1, 2, 3 or 4 and
R⁸ is hydrogen, C₁-C₁₀-alkyl, C₆-C₁₅-aryl, which may in turn be substituted by C₁-C₄-alkyl groups, or is C₃-C₁₀-cycloalkyl,
where the radicals R⁸ are identical or different,
Z is a three-way bridge and
A and A¹ are two-way bridges.

2. A transition metal complex as claimed in claim 1, in which
Z 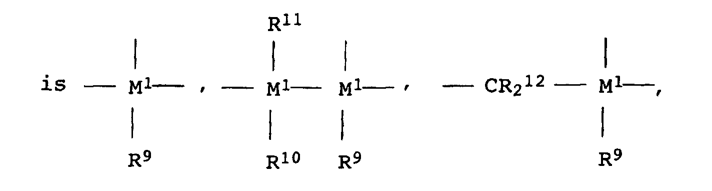 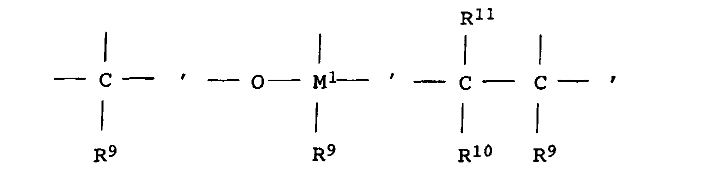 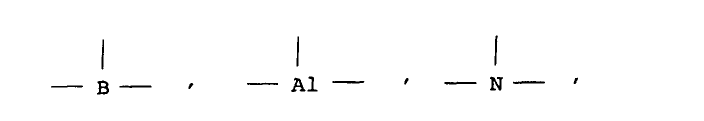 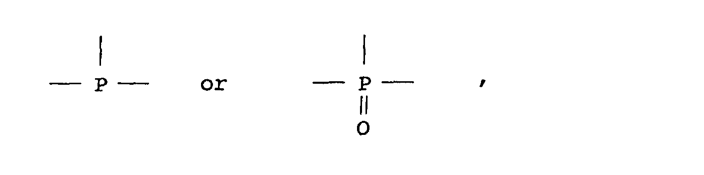
where,
R⁹ to R¹² are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or two radicals R⁹ to R¹² together with the linking atoms, form a saturated or unsaturated ring having 4 to 15 carbon atoms, and
M¹ is silicon, germanium or tin,
A is a bridge -(A²)ₘ- where
m is from 1 to 6,
A¹ and A² are 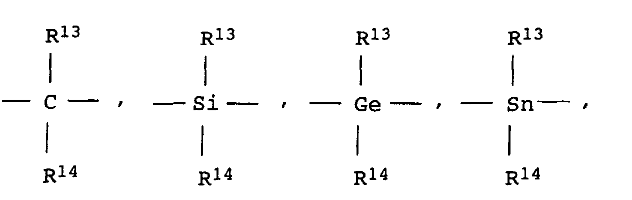 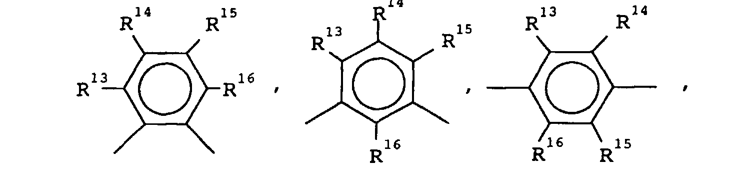 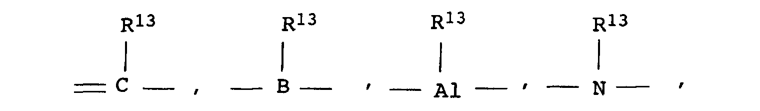 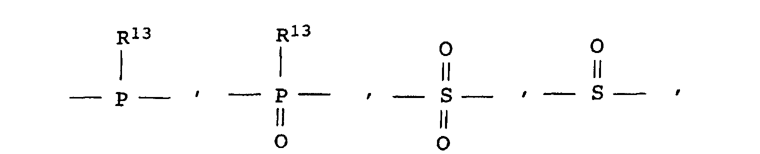 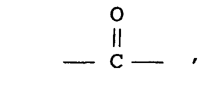 -O- or -S-,
where A¹ and the individual members A² of A are identical or different, and
R¹³ to R¹⁶ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or where two adjacent radicals in each case with the linking atoms form a saturated or unsaturated ring having 5 to 15 carbon atoms, or
where a radical R¹³ to R¹⁶ of A¹ together with an adjacent radical R² or R³ form a saturated or unsaturated ring system which has 5 to 15 carbon atoms, including the linking atoms.

3. A transition metal complex as claimed in claim 1 or 2, where the transition metal complex (Ia) corresponds to the formula (Ia') 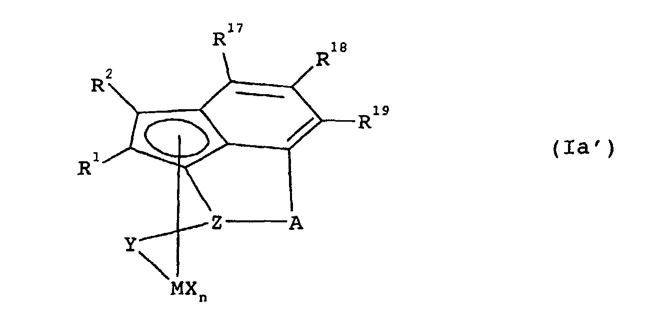 and
R¹⁷ to R¹⁹ are each a hydrogen atom, a C₁-C₁₀-alkyl group, a 5- to 7-membered cycloalkyl group, which may in turn be substituted by C₁-C₁₀-alkyl, are a C₆-C₁₅-aryl group or an arylalkyl group, or where two adjacent radicals in each case with the linking atoms form a saturated or unsaturated ring having 5 to 15 carbon atoms, or are Si(R⁴)₃.

4. A process for preparing the transition metal complex as claimed in any of claims 1 to 3, which comprises reacting cyclopentadiene compounds of the formula (IIa) or (IIb), 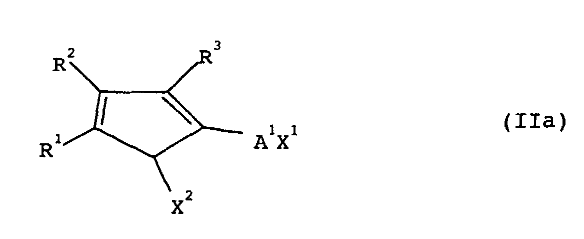 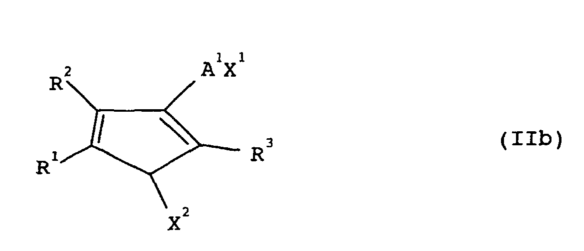 in which,
X¹ is hydrogen or a halogen and
X² is hydrogen or a radical of the formula M²R²⁰₍ₒ₋₁₎ in which,
M² is an element of the 1st - 4th main group of the Periodic Table,
R²⁰ is a halogen, a C₁-C₁₀-alkyl group, a 5- to 7-membered cycloalkyl group, which may in turn be substituted by C₁-C₁₀-alkyl, is a C₆-C₁₅-aryl group or an arylalkyl group, where the radicals R²⁰ may be identical or different, and
o is the valency of M²,
with compounds of the formula (III), 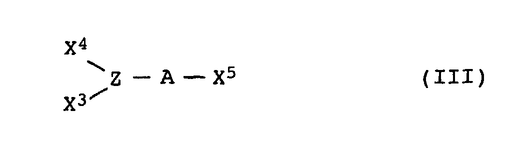 in which
X³ and X⁴ are each a halogen and
X⁵ is hydrogen, a halogen or a group 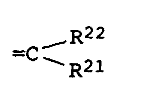 where
R²¹ and R²² are each hydrogen, C₁-C₁₀-alkyl, C₃-C₁₀-cycloalkyl or C₆-C₁₅-aryl,
to give compounds of the formula (IVa) or (IVb), 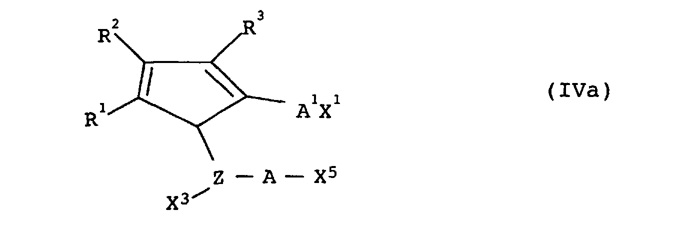 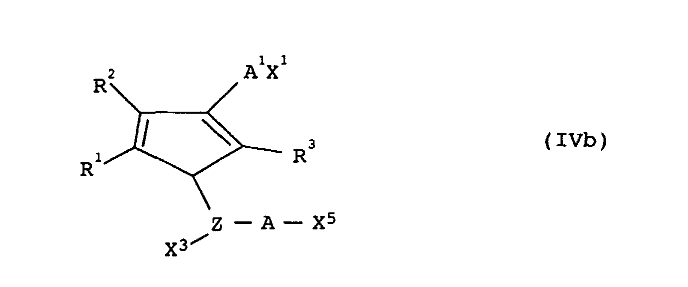 preparing from these by intramolecular ring closure the compounds of the formula (Va) or (Vb), 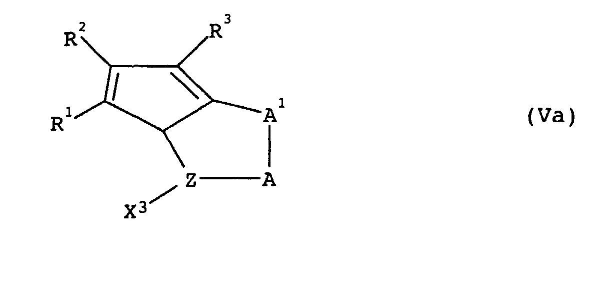 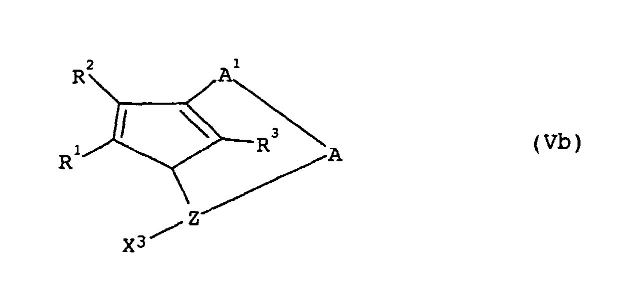 which are converted into compounds of the formula (VIa) or (VIb), 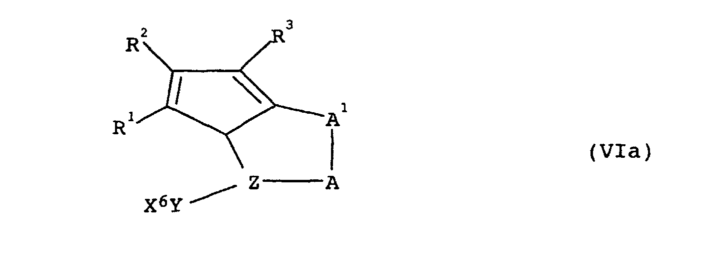 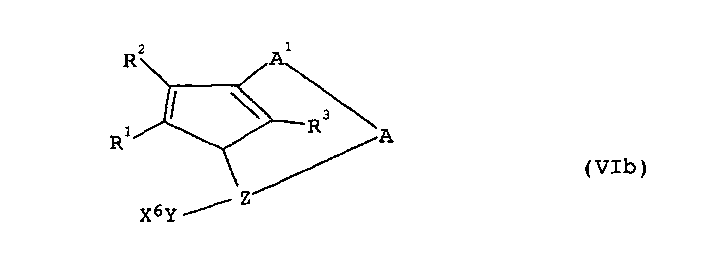 in which
X⁶ is hydrogen or a radical of the formula M³R²³₍ₚ₋₁₎, in which,
M³ is an element of the 1st - 4th main group of the Periodic Table,
R²³ is a halogen, a C₁-C₁₀-alkyl group, a 5- to 7-membered cycloalkyl group, which may in turn be substituted by C₁-C₁₀-alkyl, is a C₆-C₁₅-aryl group or an arylalkyl group, where the radicals R²³ may be identical or different, and
p is the valency of M³,
which are then converted into the transition metal complex as claimed in any of claims 1 to 3.

5. A process as claimed in claim 4, wherein, as cyclopentadiene compounds of the formula (IIa), indene compounds of the formula (IIa'), 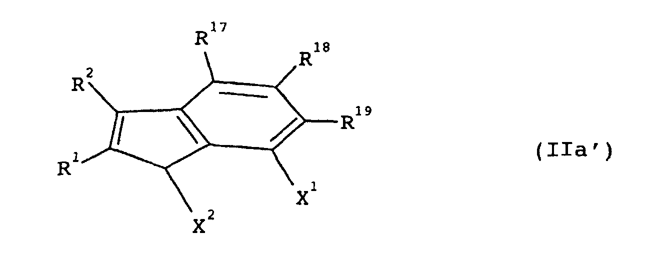 are reacted with a compound of the formula (III)
to give compounds of the formula (IVa'), 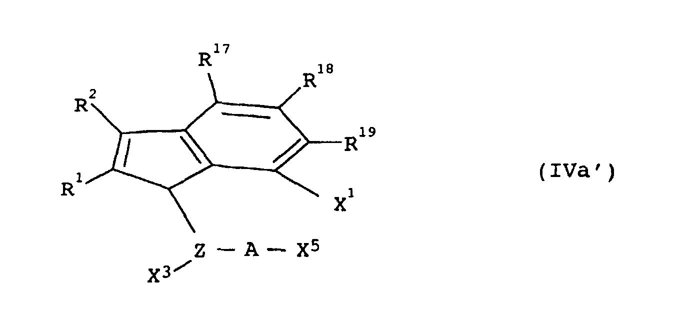 from which, by intramolecular ring closure, the compounds of the formula (Va') are prepared 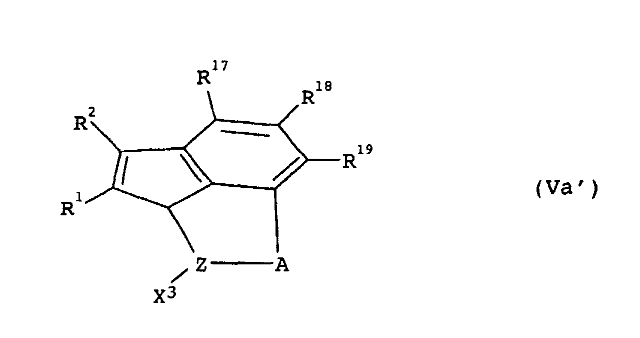 which are reacted to give compounds of the formula (VIa') 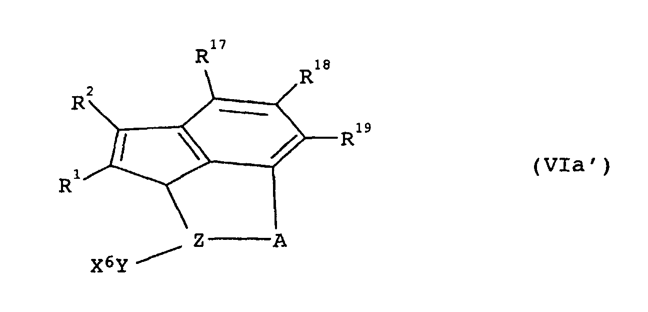 which are then converted into the transition metal complex as claimed in claim 3.

6. A compound of the formula (VIa'), 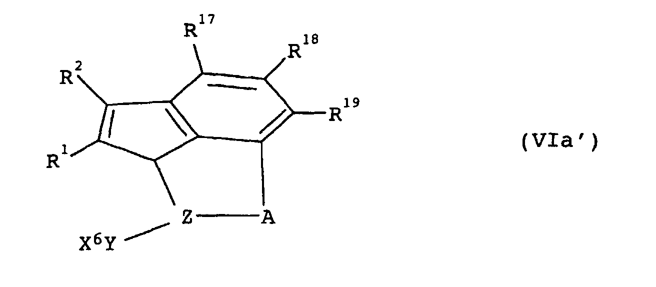 in which the substituents and indices have the following meanings:
R¹, R² and R¹⁷ to R¹⁹ are hydrogen, C₁-C₁₀-alkyl, 5- to 7-membered cycloalkyl, which in turn may be substituted by C₁-C₁₀-alkyl, are C₆-C₁₅-aryl or arylalkyl, where two adjacent radicals, in each case with the linking atoms, may form a saturated or unsaturated ring having 5 to 15 carbon atoms, or are Si(R⁴)₃ where
R⁴ is C₁-C₁₀-alkyl, C₃-C₁₀-cycloalkyl or C₆-C₁₅-aryl,
X⁶ is hydrogen or a radical of the formula M³R²³₍ₚ₋₁₎, in which
M³ is an element of the 1st - 4th main group of the Periodic Table,
R²³ is a halogen, a C₁-C₁₀-alkyl group, a 5- to 7-membered cycloalkyl group, which in turn may be substituted by C₁-C₁₀-alkyl, is a C₆-C₁₅-aryl group or an arylalkyl group, where the radicals R²³ may be identical or different, and
p is the valency of M³,
Y is ―O―, ―S―, 〉NR⁷ or 〉PR⁷, where,
R⁷ is C₁-C₁₀-alkyl, C₆-C₁₅-aryl, C₃-C₁₀-cycloalkyl or C₇-C₁₈-alkylaryl or is C₁-C₁₀-alkyl, C₆-C₁₅-aryl, C₃-C₁₀-cycloalkyl or C₇-C₁₈-alkylaryl, each of which is mono- or polysubstituted by Si(R⁸)₃, SR⁸, OR⁸, 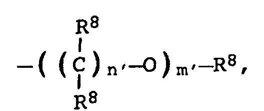 OSi(R⁸)₃, N(R⁸)₂, P(R⁸)₂ or a combination thereof, or is Si(R⁸)₃ where
n' and m' are each 1, 2, 3 or 4 and
R₈ is hydrogen, C₁-C₁₀-alkyl, C₆-C₁₅-aryl, which may in turn be substituted by C₁-C₄-alkyl groups, or is C₃-C₁₀-cycloalkyl,
where the radicals R⁸ are identical or different,
Z 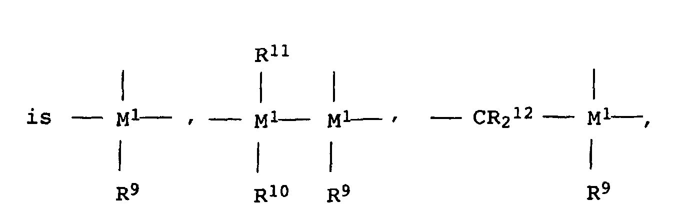 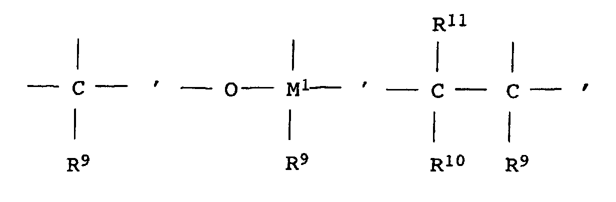 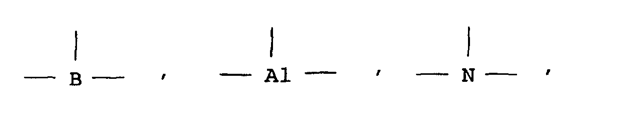 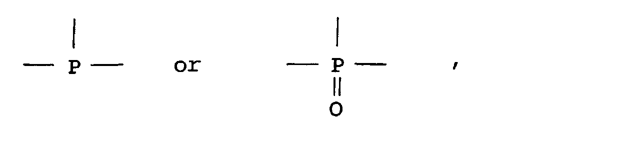
where
R⁹ to R¹² are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or where two adjacent radicals, in each case with the linking atoms, form a saturated or unsaturated ring having 4 to 15 carbon atoms, and,
M¹ is silicon, germanium or tin, and
A is a bridge -(A²)ₘ- where
m is from 1 to 6, and
A¹ and A² are 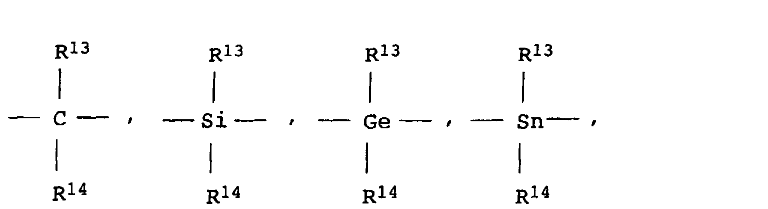 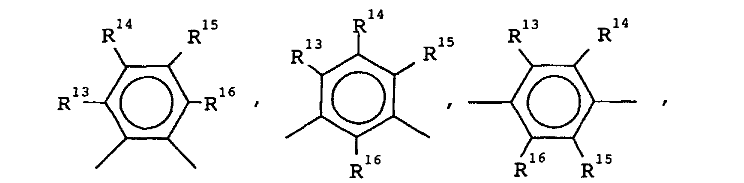 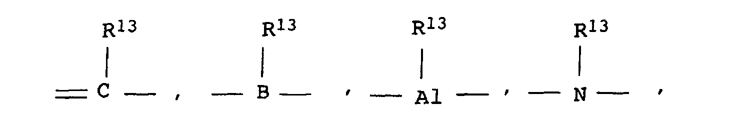 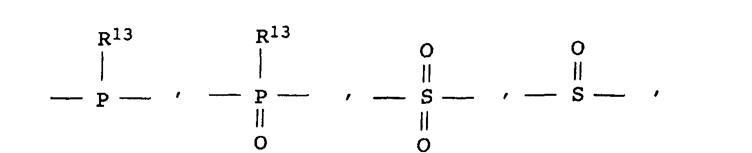 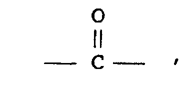 -O- or -S-,
where the individual members A² of A are identical or different.

7. A compound of the formula (IVa'), 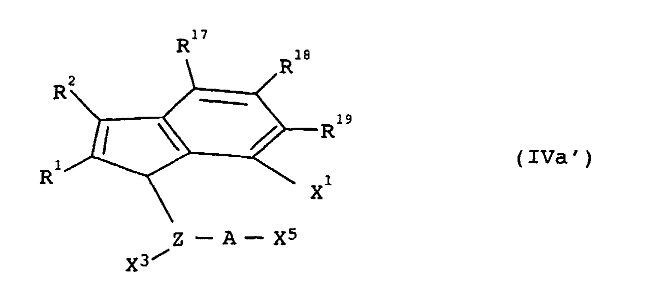 in which the substituents and indices have the following meanings:
R¹, R² and R¹⁷ to R¹⁹ are hydrogen, C₁-C₁₀-alkyl, 5- to 7-membered cycloalkyl, which in turn may be substituted by C₁-C₁₀-alkyl, C₆-C₁₅-aryl or arylalkyl, where two adjacent radicals, in each case with the linking atoms, may form a saturated or unsaturated ring having 5 to 15 carbon atoms, or are Si(R⁴)₃ where
R⁴ is C₁-C₁₀-alkyl, C₃-C₁₀-cycloalkyl or C₆-C₁₅-aryl,
X¹ is hydrogen or a halogen,
X³ is a halogen and
X⁵ is hydrogen, a halogen or a group 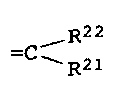 where
R²¹ and R²² are each hydrogen, C₁-C₁₀-alkyl, C₃-C₁₀-cycloalkyl or C₆-C₁₅-aryl,
Z is 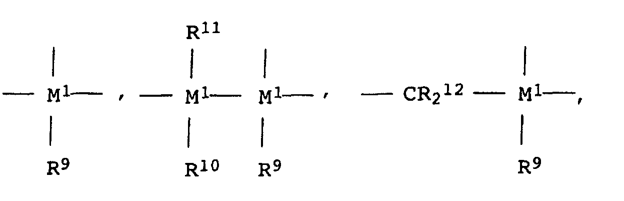 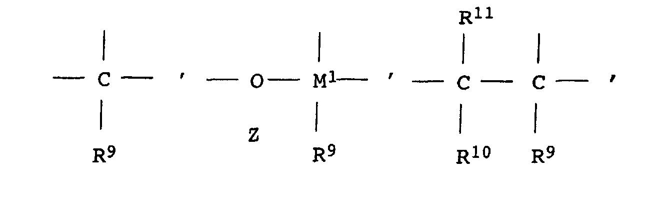 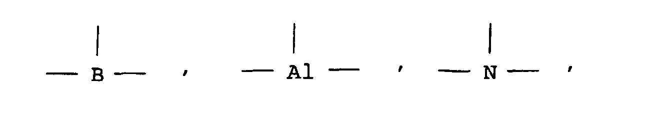 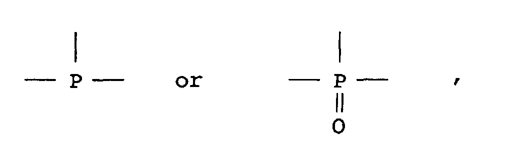 where
R⁹ to R¹² are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or where two adjacent radicals, in each case with the linking atoms, form a saturated or unsaturated ring having 4 to 15 carbon atoms, and,
M¹ is silicon, germanium or tin, and
A is a bridge -(A²)ₘ- where
m is from I to 6, and
A² 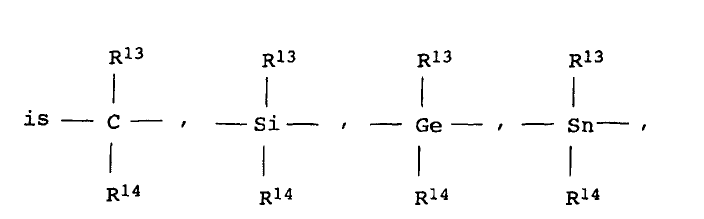 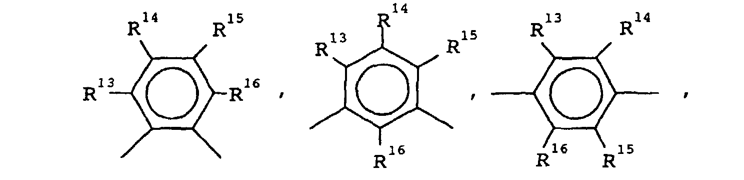 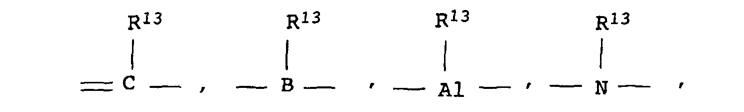 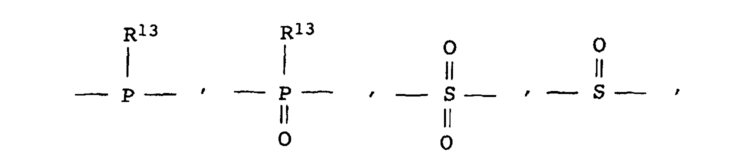 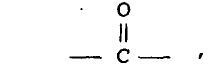 -O- or -S-,
where the individual members A² of A are identical or different.

8. The use of transition metal complexes as claimed in any of claims 1 to 3 for polymerizing olefins.

9. A process for polymerizing olefins, which comprises carrying out the polymerization in the presence of transition metal complexes as claimed in any of claims 1 to 3 and metallocenium-ion-forming compounds.

## Revendications

1. Complexes de métaux de transition de formules générales (Ia) ou (Ib), 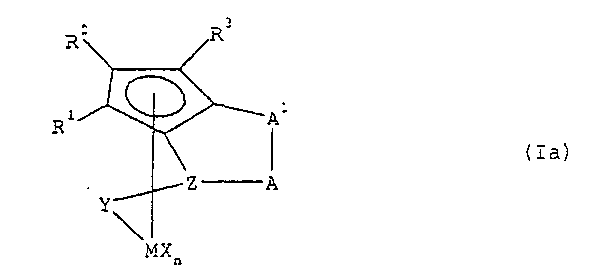 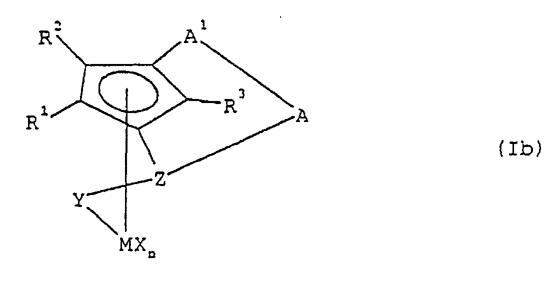 dans lesquelles les substituants et indices ont la signification suivante:
R¹ à R³ hydrogène, alkyle en C₁-C₁₀, cycloalkyle ayant 5 à 7 chaînons - qui peut à son tour être substitué par un alkyle en C₁-C₁₀ -, aryle en C₆-C₁₅ ou arylalkyle, tandis que les restes peuvent former avec les restes voisins, à chaque fois avec les atomes les reliant, un cycle saturé ou insaturé présentant 5 à 15 atomes de carbone, ou Si(R⁴)₃, tandis que
R⁴ désigne un alkyle en C₁-C₁₀, un cycloalkyle en C₃-C₁₀ ou un aryle en C₆-C₁₅,
M représente le titane, le zirconium, le hafnium, le vanadium, le niobium ou le tantale ou un élément du sous-groupe III de la classification périodique des éléments ou des lanthanoïdes,
X désigne le fluor, le chlore, l'iode, l'hydrogène, un alkyle en C₁-C₁₀, un aryle en C₆-C₁₅, un alkylaryle ayant 1 à 10 atomes de carbone dans le reste alkyle et 6 à 20 atomes de carbone dans le reste aryle, -OR⁵ ou -NR⁵R⁶,
n vaut 1, 2 ou 3, tandis que n correspond à la valence de M moins le nombre 2,
tandis que
R⁵ et R⁶ désignent un alkyle en C₁-C₁₀, un aryle en C₆-C₁₅, un alkylaryle, un arylalkyle, un fluoroalkyle ou un fluoroaryle avec à chaque fois 1 à 10 atomes de C dans le reste alkyle et 6 à 20 atomes de C dans le reste aryle, et
les restes X sont identiques ou différents,
Y désigne ―O―, ―S―, 〉NR⁷ ou 〉PR⁷,
tandis que
R⁷ représente un groupe alkyle en C₁-C₁₀, aryle en C₆-C₁₅, cycloalkyle en C₃-C₁₀ ou alkylaryle en C₇-C₁₈, ou un groupe alkyle en C₁-C₁₀, aryle en C₆-C₁₅, cycloalkyle en C₃-C₁₀ ou alkylaryle en C₇-C₁₈ substitué une ou plusieurs fois par Si(R⁸)₃, SR⁸, OR⁸, 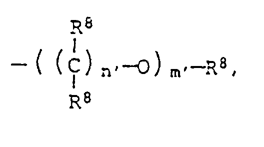 OSi(R⁸)₃, N(R⁸)₂, P(R⁸)₂ ou une combinaison de ceux-ci, ou Si(R⁸)₃, avec
n' et m' valant à chaque fois 1, 2, 3 ou 4, et
R⁸ représentant l'hydrogène, un alkyle en C₁-C₁₀, un aryle en C₆-C₁₅, qui peut à son tour être substitué par des groupes alkyle en C₁-C₄, ou un cycloalkyle en C₃-C₁₀,
tandis que les restes R⁸ sont identiques ou différents,
Z est un groupe pontant trivalent et
A et A¹ désignent des chaînons pontés à trois liaisons.

2. Complexes de métaux de transition selon la revendication 1, dans lesquels
Z est 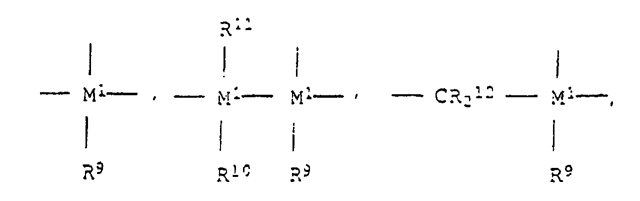 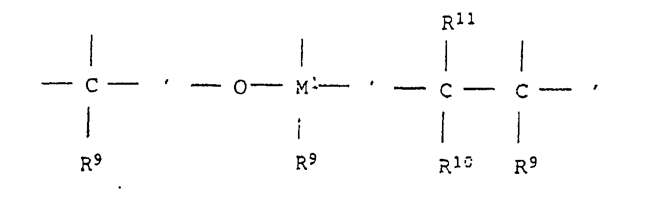 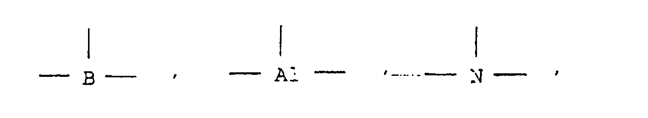 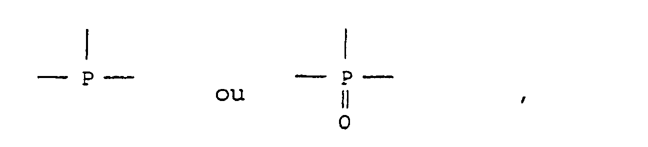
tandis que
R⁹ à R¹² désignent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀ ou deux restes R⁹ à R¹² forment avec les atomes qui les relient un cycle saturé ou insaturé présentant 4 à 15 atomes de C, et
M¹ est le silicium, le germanium ou l'étain,
A est un chaînon pontant -(A²)ₘ- avec
m valant de 1 à 6,
A¹ et A² sont 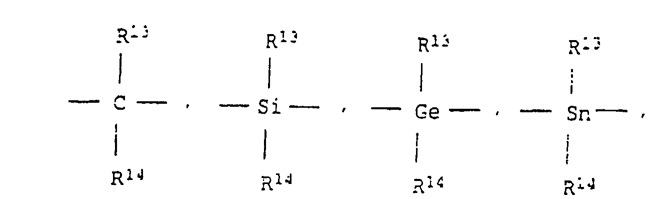 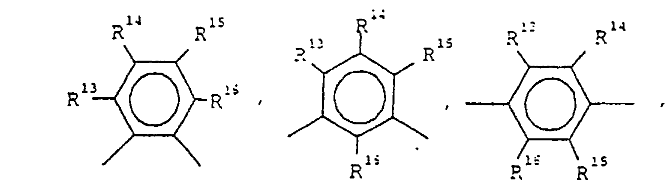 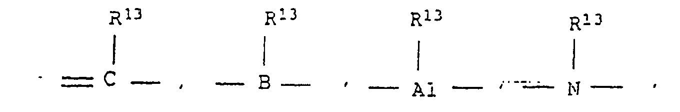 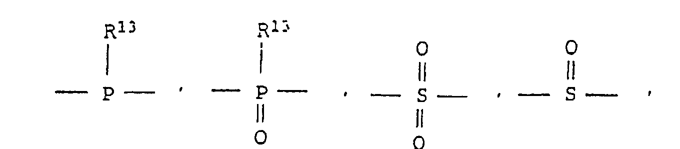 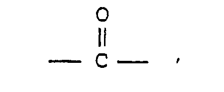 -O- ou -S-,
tandis que A¹ et les membres individuels A² de A sont identiques ou différents, et
R¹³ à R¹⁶ sont identiques ou différents et désignent à chaque fois un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀ ou deux restes voisins forment à chaque fois avec les atomes qui les relient un cycle saturé ou insaturé présentant 5 à 15 atomes de C, ou
tandis qu'un reste R¹³ à R¹⁶ de A¹ forme conjointement avec le reste R² ou R³ voisin un système cyclique saturé ou insaturé, présentant avec les atomes les reliant 5 à 15 atomes de C.

3. Complexes de métaux de transition selon la revendication 1 ou 2, dans lesquels les complexes de métaux de transition (Ia) correspondent à la formule générale (Ia') 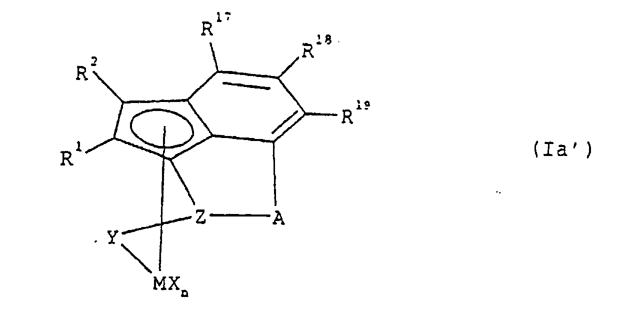 et
R¹⁷ à R¹⁹ sont à chaque fois un atome d'hydrogène, un groupe alkyle en C₁-C₁₀, un groupe cycloalkyle ayant 5 à 7 chaînons, qu peut à son tour être substitué par des groupes alkyle en C₁-C₁₀, un groupe aryle en C₆-C₁₅ ou un groupe arylalkyle, ou dans laquelle deux restes voisins forment à chaque fois avec les atomes les reliant un cycle saturé ou insaturé présentant 5 à 15 atomes de C, ou Si(R⁴)₃.

4. Procédé pour la préparation de complexes de métaux de transition selon les revendications 1 à 3, **caractérisé par le fait qu'**on fait réagir des composés de cyclopentadiène de formules générales (IIa) ou (IIb), 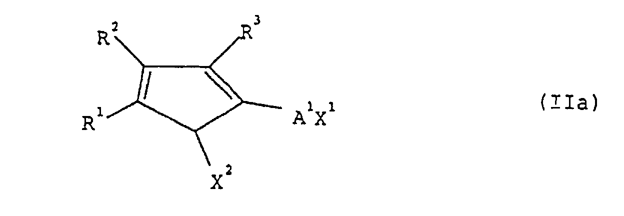 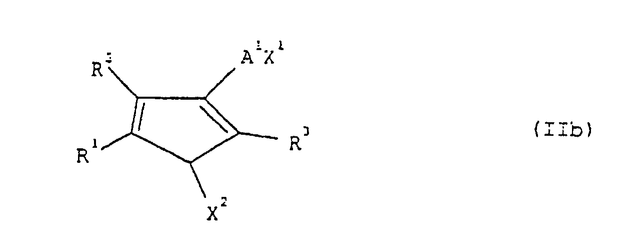 dans lesquelles
X¹ désigne l'hydrogène ou un halogène et
X² représente l'hydrogène ou un reste de formule M²R²⁰₍ₒ₋₁₎, où
M² désigne un élément du 1^{er} - 4^{ème} groupe principal de la classification périodique des éléments,
R²⁰ désigne un halogène, un groupe alkyle en C₁-C₁₀, un groupe cycloalkyle ayant 5 à 7 chaînons, qui peut à son tour être substitué par des groupes alkyle en C₁-C₁₀, un groupe aryle en C₆-C₁₅ ou un groupe arylalkyle, tandis que les restes R²⁰ peuvent être identiques ou différents, et
o désigne la valence de M²,
avec des composés de formule générale (III), 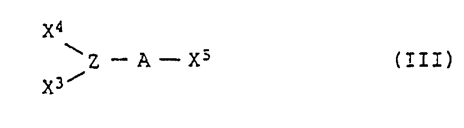 dans lesquels
X³ et X⁴ représentent chacun un halogène et
X⁵ désigne l'hydrogène, un halogène ou un groupe 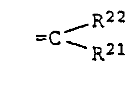 avec
R²¹ et R²² représentent chacun l'hydrogène, un alkyle en C₁-C₁₀, un cycloalkyle en C₃-C₁₀ ou un aryle en C₆-C₁₅,
pour former des composés de formules générales (IVa) ou (IVb), 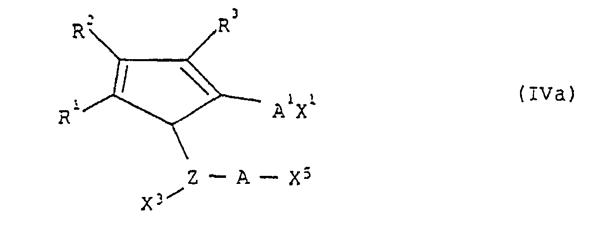 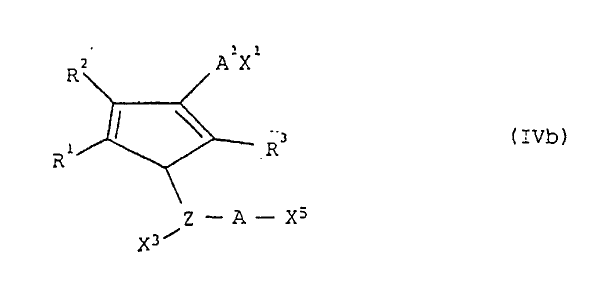 on prépare à partir de ceux-ci par cyclisation intramoléculaire les composés de formules générales (Va) ou (Vb), 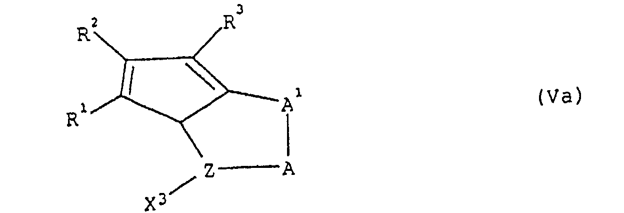 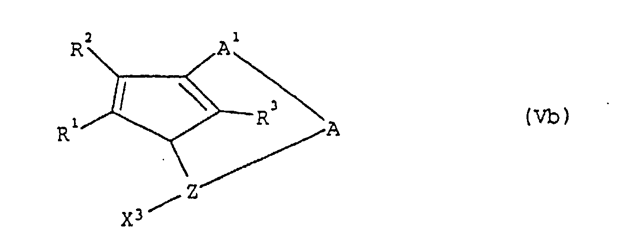 qui sont convertis en des composés de formules générales (VIa) ou (VIb), 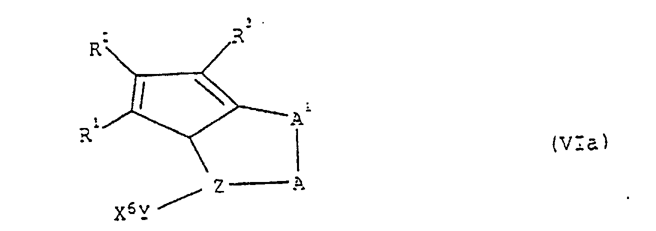 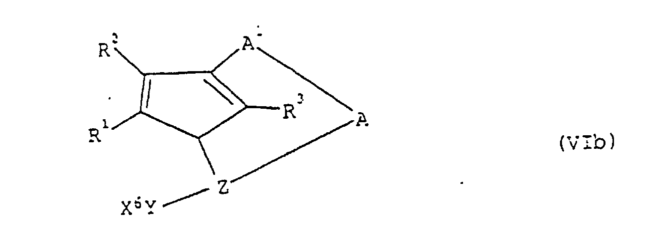 dans lesquelles
X⁶ désigne l'hydrogène ou un reste de formule M³R²³₍ₚ₋₁₎, dans laquelle
M³ représente un élément du 1^{er} - 4^{ème} groupe principal de la classification périodique des éléments,
R²³ désigne un halogène, un groupe alkyle en C₁-C₁₀, un groupe cycloalkyle ayant 5 à 7 chaînons, qui peut à son tour être substitué par des groupes alkyle en C₁-C₁₀, un groupe aryle en C₆-C₁₅ ou un groupe arylalkyle, tandis que les restes R²³ peuvent être identiques ou différents, et
p représente la valence de M³,
et qu'on convertit ensuite en les complexes de métaux de transition selon les revendications 1 à 3.

5. Procédé selon la revendication 4, **caractérisé par le fait qu'**on fait réagir en tant que composés de cyclopentadiène de formule générale (IIa) des composés d'indène de formule générale (IIa') 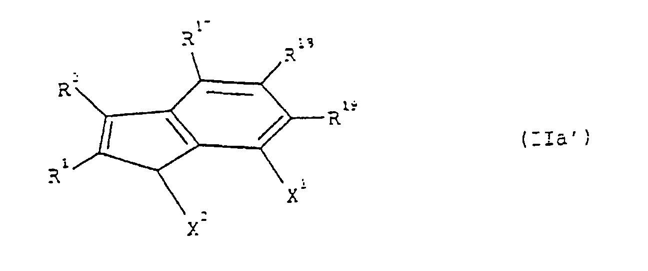 avec un composé de formule générale (III) pour former des composés de formule générale (IVa'), 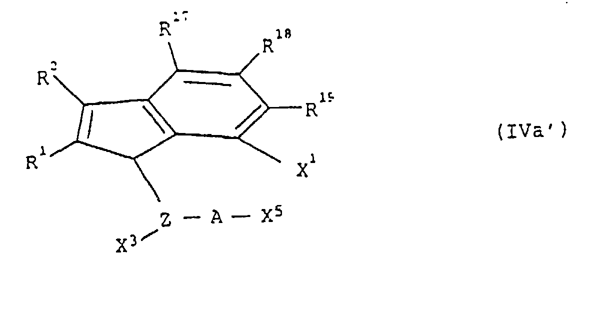 à partir de ceux-ci on prépare par cyclisation intramoléculaire les composés de formule générale (Va'), 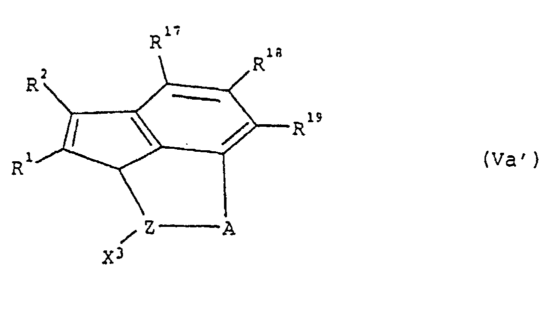 qui sont transformés en des composés de formule générale (VIa'), 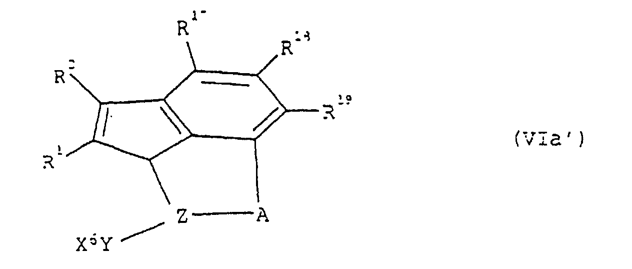 et que l'on convertit ensuite en les complexes de métaux de transition selon la revendication 3.

6. Composés de formule générale (Via') 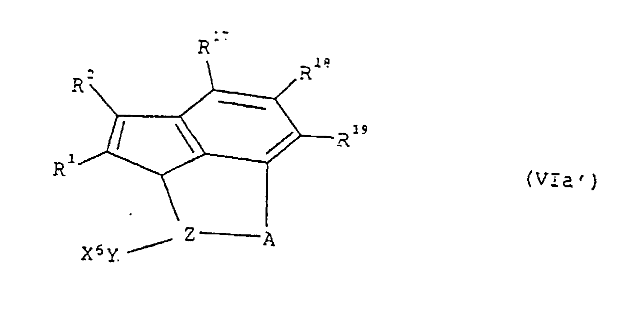 dans laquelle les substituants et indices ont la signification suivante:
R¹, R² et R¹⁷ à R¹⁹ désignent l'hydrogène, un alkyle en C₁-C₁₀, un cycloalkyle ayant 5 à 7 chaînons, qui peut à son tour être substitué par des groupes alkyle en C₁-C₁₀, un aryle en C₆-C₁₅ ou un arylalkyle, tandis que deux restes voisins peuvent former à chaque fois avec les atomes les reliant un cycle saturé ou insaturé présentant 5 à 15 atomes de C, ou Si(R⁴)₃ avec
R⁴ alkyle en C₁-C₁₀, cycloalkyle en C₃-C 10 ou aryle en C₆-C₁₅,
X⁶ hydrogène ou un reste de formule M³R²³(p-1), dans laquelle
M³ représente un élément du 1^{er} - 4^{ème} groupe principal de la classification périodique des éléments,
R²³ désigne un halogène, un groupe alkyle en C₁-C₁₀, un groupe cycloalkyle ayant 5 à 7 chaînons, qui peut à son tour être substitué par des groupes alkyle en C₁-C₁₀, un groupe aryle en C₆-C₁₅ ou un groupe arylalkyle, tandis que les restes R²³ peuvent être identiques ou différents, et
p désigne la valence de M³,
Y représente -O-, -S-, 〉NR⁷ ou 〉PR⁻ ,
tandis que
R⁷ représente un alkyle en C₁-C₁₀, un aryle en C6-C₁₅, un cycloalkyle en C₃-C₁₀ou un alkylaryle en C₇-C₁₈, ou un groupe alkyle en C₁-C₁₀, aryle en C₆-C₁₅, cycloalkyle en C₃-C₁₀ ou alkylaryle en C₇-C₁₈ substitué une ou plusieurs fois par
N(R⁸)₂, P(R⁸)₂ ou une combinaison de ceux-ci, ou Si(R⁸)₂ avec 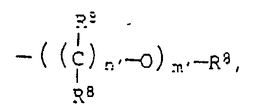 OSi(R⁸)₃,
n' et m' valant à chaque fois 1, 2, 3 ou 4 et
R⁸ hydrogène, alkyle en C₁-C₁₀, aryle en C₆-C₁₅, qui peut à son tour être substitué par des groupes alkyle e C₁-C₄, ou cycloalkyle en C₃-C₁₀,
tandis que les restes R⁸ sont identiques ou différents,
Z désigne 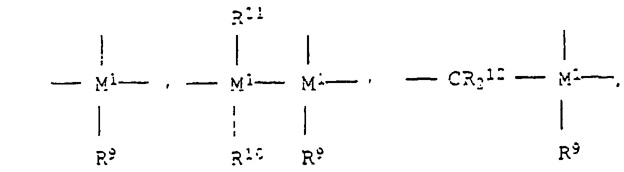 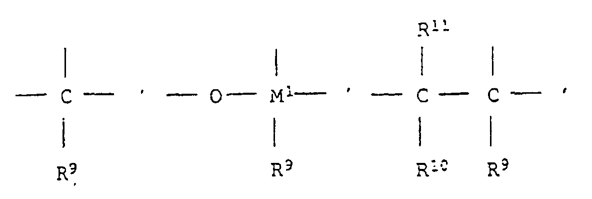 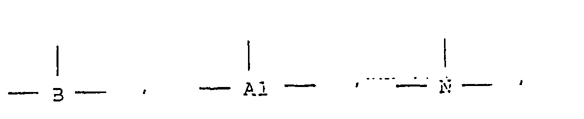 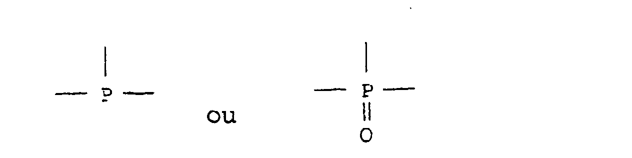 tandis que
R⁹ à R¹² désignent à chaque fois un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou dans lequel deux restes voisins forment à chaque fois avec les atomes les reliant un cycle saturé ou insaturé présentant 4 à 15 atomes de C, et
M¹ est le silicium, le germanium ou l'étain, et
A désigne un élément ponté -(A²)ₘ- avec
m valant de 1 à 6 et
A² désigne 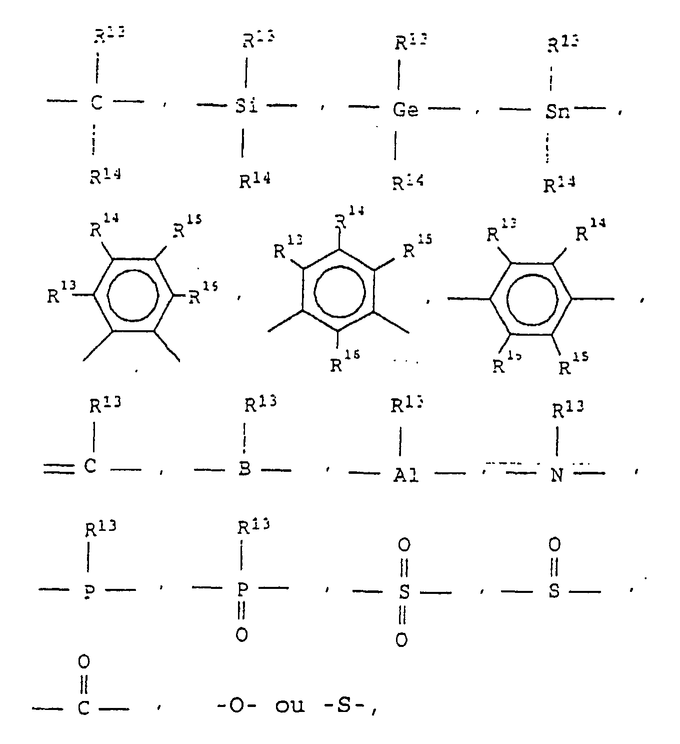
tandis que les éléments individuels A² de A sont identiques ou différents.

7. Composés de formule générale (IVa') 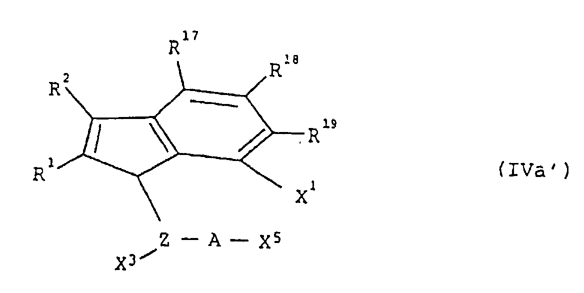 dans laquelle les substituants et indices ont la signification suivante:
R¹, R² et R¹⁷ à R¹⁹ désignent l'hydrogène, un alkyle en C₁-C₁₀, un cycloalkyle ayant 5 à 7 chaînons, qui peut à son tour être substitué par des groupes alkyle en C₁-C₁₀, aryle en C₆-C₁₅ ou arylalkyle, tandis que deux restes voisins peuvent former à chaque fois avec les atomes les reliant un cycle saturé ou insaturé présentant 5 à 15 atomes de C, ou Si(R⁴)₃ avec
R⁴ alkyle en C₁-C₁₀, cycloalkyle en C₃-C₁₀ ou aryle n C₆-C₁₅,
X¹ hydrogène ou un halogène,
X³ un halogène et
X⁵ hydrogène, un halogène ou un groupe 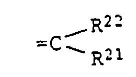 avec
R²¹ et R²² désignant chacun l'hydrogène, un alkyle en C₁-C₁₀, un cycloalkyle en C₃-C₁₀ ou un aryle en C₆-C₁₅, 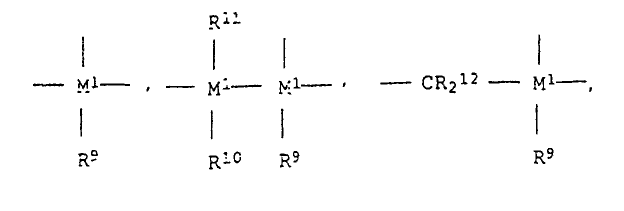 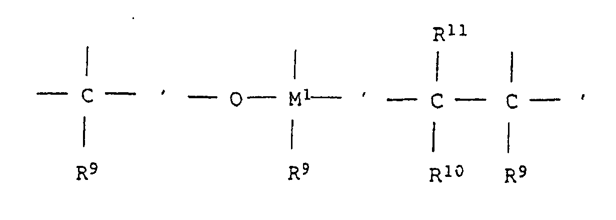 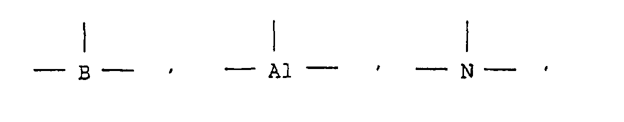 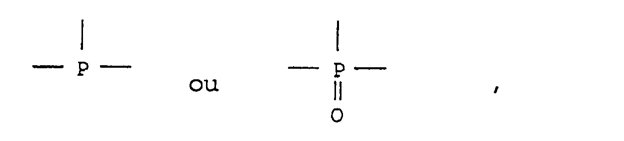
tandis que
R⁹ à R¹² désignent à chaque fois un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou tandis que deux restes voisins forment à chaque fois avec les atomes les reliant un cycle saturé ou insaturé présentant 4 à 15 atomes de C, et
M¹ est le silicium, le germanium ou l'étain, et
A désigne un élément de pontage -(A²)ₘ- avec
m valant de 1 à 6 et
A² désignant 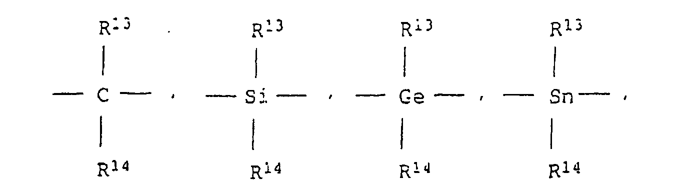 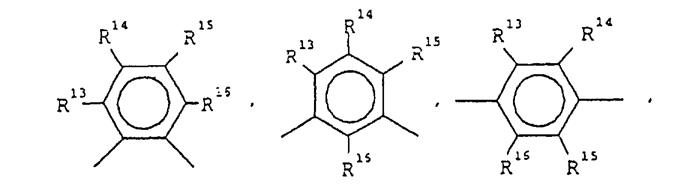 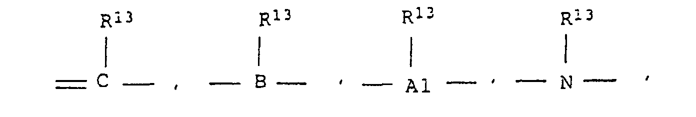 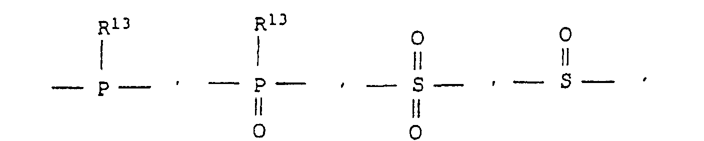 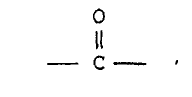 -O- ou -S-,
tandis que les éléments individuels A² de A sont identiques ou différents.

8. Utilisation des complexes de métaux de transition selon les revendications 1 à 3 pour la polymérisation d'oléfines.

9. Procédé pour la polymérisation d'oléfines, **caractérisé par le fait que** la polymérisation est effectuée en présence de complexes de métaux de transition selon les revendications 1 à 3 et de composés formant des ions métallocénium.
